# EUROPÄISCHE PATENTSCHRIFT

(11) **EP 4 293 324 B1**
(45) Veröffentlichungstag und Bekanntmachung des Hinweises auf die Patenterteilung: **28.10.2026**
(21) Anmeldenummer: 23176653.6
(22) Anmeldetag: 01.06.2023
(51) Int. Cl.: G01F 1/66, G01L 11/06, G01F 1/667

(54) **VERFAHREN ZUR ERMITTLUNG EINES FLUIDDRUCKS IN EINEM FLUIDVERSORGUNGSNETZ FÜR FLUID SOWIE ULTRASCHALLFLUIDZÄHLER**
METHOD FOR DETERMINING A FLUID PRESSURE IN A FLUID SUPPLY NETWORK FOR FLUID, AND ULTRASONIC FLUID METER
PROCÉDÉ DE DÉTERMINATION D'UNE PRESSION DE FLUIDE DANS UN RÉSEAU D'ALIMENTATION EN FLUIDE ET COMPTEUR DE FLUIDE À ULTRASONS

(30) Priorität: 15.06.2022 DE 102022115042
(43) Veröffentlichungstag der Anmeldung: 20.12.2023
(73) Patentinhaber: Diehl Metering GmbH, 91522 Ansbach (DE)
(72) Erfinder: Wolf, Philip, 91522 Ansbach (DE); Hofmann, Alexander, 91623 Sachsen (DE); Herrmann, Florian, 91550 Dinkelsbühl (DE); Ritter, Steffen, 91572 Bechhofen (DE)
(74) Vertreter: Diehl Patentabteilung

(56) Entgegenhaltungen:
- CN-A- 104 062 062
- DE-A1- 102012 022 376
- DE-A1- 102017 005 207
- DE-A1- 102019 007 608
- DE-A1- 102020 002 837

## Beschreibung

Die vorliegende Erfindung betrifft ein Verfahren zur Ermittlung eines Fluiddrucks in einem Fluidversorgungsnetz für Fluid gemäß dem Oberbegriff des Anspruchs 1 und ein Ultraschallfluidzähler für die Installation in einem Fluidversorgungsnetz gemäß dem Oberbegriff des Anspruchs 16.

Ultraschallfluidzähler werden üblicherweise dazu verwendet, Verbrauchsmengen von Fluid in einem Fluidversorgungsnetz zu ermitteln. Das Fluidversorgungsnetz kann aus einer Mehrzahl von Rohrleitungssystemen bestehen. Ultraschallfluidzähler werden in der Regel zur Durchfluss-, Volumen- oder Wärmemengenbestimmung und/oder zur Druckbestimmung von Fluiden, wie z. B. Wasser, eingesetzt.

### Technologischer Hintergrund

Der häufigste Anwendungsbereich von Ultraschallfluidzählern sind Wasserzähler zur Ermittlung des Trinkwasserverbrauchs in Gebäuden sowie Haushalten sowie Wärmemengenzähler zur Ermittlung der verbrauchten Wärmeenergie. Ultraschallfluidzähler besitzen in der Regel ein Anschlussgehäuse mit einem Einlass und einem Auslass. Mittels des Anschlussgehäuses kann der Ultraschallfluidzähler in ein Rohrleitungssystem eines Fluidversorgungsnetzes, wie z. B. eine Trinkwasserversorgung, installiert werden. Die Strömungsrichtung des Fluides innerhalb des Ultraschallfluidzählers kann vom Einlass zum Auslass unverändert sein oder sich je nach Konstruktion des Ultraschallfluidzählers auch ändern. Neben der Bestimmung der Fließgeschwindigkeit bzw. einem daraus abgeleiteten Durchfluss können Ultraschallfluidzähler auch dazu genutzt werden, den Fluiddruck zu ermitteln.

Die Funktionsweise eines Ultraschallfluidzählers basiert auf dem Einsatz von Ultraschallwandlern, insbesondere auf piezoelektrischer Basis, die im Bereich des Anschlussgehäuses des Ultraschallfluidzählers angebracht werden. Hierbei bilden immer zwei Ultraschallwandler ein Ultraschallwandlerpaar, wobei sich zwischen den beiden Ultraschallwandlern des Ultraschallwandlerpaars eine Ultraschallmessstrecke befindet. Entlang der Ultraschallmessstrecke verlaufen Ultraschallsignale, sogenannte Ultraschallbursts, die von den Ultraschallwandlern gesendet und empfangen werden.

Die Durchfluss- und/oder Volumenbestimmung eines durchströmenden Mediums mittels eines Ultraschallzählers kann anhand einer Laufzeitdifferenzmessung der Ultraschallsignale erfolgen. Die Laufzeitdifferenz wird dadurch bestimmt, dass zunächst ein Ultraschallsignal von einem ersten Ultraschallwandler zu einem zweiten Ultraschallwandler entlang der Ultraschallmessstrecke und z. B. schräg in Strömungsrichtung gesendet wird. Anschließend wird ein Ultraschallsignal vom zweiten Ultraschallwandler entlang der Ultraschallmessstrecke entgegengesetzt, z. B. ebenfalls schräg zur Strömungsrichtung hin zum ersten Ultraschallwandler gesendet. Die Übertragung des Ultraschallsignals von einem Ultraschallwandler zum anderen Ultraschallwandler entlang der Ultraschallmessstrecke erfolgt in Strömungsrichtung des Mediums schneller als entgegengesetzt der Strömungsrichtung des Mediums. Diese zeitliche Differenz der Übertragungsdauer der beiden Ultraschallsignale wird als Laufzeitdifferenz der Ultraschallsignale bezeichnet. Anhand dieses Laufzeitunterschieds und der im Vorfeld bekannten Dimension des Ultraschallfluidzählers bzw. der Ultraschallmessstrecke kann der Durchfluss oder auch das Volumen des durchströmenden Mediums unabhängig von der Schallgeschwindigkeit im Medium bestimmt werden.

Ist die Fließgeschwindigkeit bekannt oder auf oben beschriebene Weise bestimmt worden, kann anhand der einzelnen Ultraschalllaufzeiten oder einer Summenbildung auch die Ultraschallgeschwindigkeit im Fluid ermittelt werden. Diese ist von der Temperatur und dem Fluiddruck abhängig. Ist die Temperatur bekannt und/oder konstant oder wird die Temperatur gemessen, kann somit bei bekannter Ultraschallgeschwindigkeit der Fluiddruck bestimmt werden. Da sich die Ultraschallgeschwindigkeit bei einer Druckänderung jedoch nur geringfügig ändert, führen bereits kleine Messabweichungen bei der Messung der Ultraschalllaufzeit bzw. der Ultraschalllaufzeiten zu großen Abweichungen bei der Druckermittlung.

### Druckschriftlicher Stand der Technik

Aus der DE 10 2017 005 207 A1 ist ein Verfahren zur Bestimmung des Drucks eines Fluides bekannt. Hierbei wird ein von dem Druck des Fluides beeinflusster Parameter ermittelt und zwar anhand einer Laufzeitdifferenz zwischen der Laufzeit einer akustischen Welle in einer ersten Frequenz F1 und der Laufzeit der akustischen Welle in einer zweiten Frequenz F2. Aus den Laufzeiten wird als Parameter der Phasen-Frequenz-Offset in Vorwärtsrichtung sowie in Rückwärtsrichtung bestimmt. Hierbei wird ein Nulldurchgang verwendet, bei dem die Empfangsspannung möglichst maximal ist, z.B. der achte Nulldurchgang der achten Welle des Empfangssignals.

Aus der DE 10 2019 007 608 A1 ist eine Messeinrichtung sowie ein Verfahren zur Ermittlung eines Drucks in einem ein Fluid aufnehmenden oder von einem Fluid durchströmten Messbehälter bekannt. Die Messeinrichtung kann hierbei zusätzlich wenigstens einen Temperatursensor zur Erfassung einer Temperatur des Fluides umfassen, wobei eine Steuereinrichtung dazu eingerichtet ist, den Druck zusätzlich in Abhängigkeit der Temperatur zu ermitteln. Durch Nutzung des Temperatursensors und eines vorgegebenen Zusammenhangs zwischen der Temperatur und der Schallgeschwindigkeit kann ein Temperatureinfluss auf die Druckmessung im Wesentlichen vollständig kompensiert werden.

Die CN 104062062 A beschreibt ein nicht invasives Druckdetektionsverfahren unter Verwendung von in der Wandung eines Druckbehälters fortschreitenden reflektierten Longitudinalwellen. Die reflektierten Longitudinalwellen haben eine ideale Wellenform für eine Erfassung von Belastungs- und Druckveränderungen in der Wandung des Druckbehälters. Das Innere des Druckbehälters wird hierbei mit Wasser in einen Überdruckzustand gebracht. Hierbei wird keine Ultraschalllaufzeit innerhalb eines Fluides gemessen.

Die DE 10 2020 002 837 A1 betrifft ein Verfahren zum Betrieb einer Messeinrichtung, bei dem eine Steuereinrichtung einen Schwingungswandler ansteuert, um eine in einer Seitenwand des Messvolumens geführten Welle mit unterschiedlichen Anregungsfrequenzen anzuregen. Aus den unterschiedlichen Anregungsfrequenzen resultieren unterschiedliche Phasengeschwindigkeiten der geführten Welle in der Seitenwand und als Folge davon kommt es zu einer Laufzeitänderung. Die Laufzeit hängt von der Dispersionsrelation in der Seitenwand ab und somit von der Temperatur der Seitenwand und auch von einer aufgrund des Fluiddrucks sich einstellenden elastischen Verformung der Seitenwand. Diese ist wiederum vom Fluiddruck abhängig, so dass mit diesem Verfahren der Fluiddruck bestimmt werden kann.

Die DE 10 2012 022 376 A1 offenbart ein Verfahren zur Bestimmung des Drucks eines Fluides in einem Behälter, wobei mittels einer akustischen Welle in dem Fluid eine von dem Druck des Fluides beeinflusste Eigenschaft des Fluides oder eines mit dem Druck des Fluid beaufschlagten Elements in dem Behälter ermittelt wird und wobei aus der ermittelten Eigenschaft der Druck bestimmt wird. Eine Korrektur von Messabweichungen wird nicht offenbart, sodass der Fluiddruck nur mit eingeschränkter Genauigkeit bestimmbar ist.

### Aufgabe der vorliegenden Erfindung

Die Aufgabe der vorliegenden Erfindung besteht darin, ein Verfahren zur Ermittlung eines Fluiddrucks in einem Fluidversorgungsnetz für Fluid sowie einen Ultraschallzähler bereitzustellen bei dem mithilfe einer Kompensation ein Fluiddruck bestimmt wird. Dadurch soll die Genauigkeit der Druckbestimmung erhöht werden.

### Lösung der Aufgabe

Die vorstehende Aufgabe wird durch die gesamte Lehre des Anspruchs 1 sowie des Anspruchs 16 gelöst. Zweckmäßige Ausgestaltungen der Erfindung sind in den Unteransprüchen beansprucht.

Erfindungsgemäß wird der Fluiddruck aus der mindestens einen gemessenen Ultraschalllaufzeit mithilfe einer mathematischen Kompensation bestimmt, wobei die mathematische Kompensation eine Messabweichung aufgrund mindestens einen Einfluss aus der nachfolgenden Gruppe von Einflüssen betrifft:
- eine Länge der Ultraschallmessstrecke oder Längenänderung derselben hervorgerufen durch thermische Ausdehnung,
- eine Ultraschalllaufzeitkomponente entlang der Ultraschallmessstrecke, die nicht im Fluid liegt, oder eine Änderung derselben,
- eine Ultraschalllaufzeitkomponente innerhalb der Ultraschallmessstrecke, die in einer Änderung (25) der Zusammensetzung des Fluides liegt,
- eine Befestigung und/oder Lage des Ultraschallwandlers zur Ultraschallmessstrecke oder eine Änderung derselben,
- eine Latenz der Signalverarbeitung oder eine Änderung derselben und/oder
- einen Durchfluss oder eine Änderung desselben.

Ein besonderer Vorteil der Erfindung ist, dass der Fluiddruck durch die mathematische Kompensation wesentlich genauer bestimmt werden kann.

Zweckmäßigerweise kann von dem ersten Ultraschallwandler ein Ultraschallsignal ausgesendet werden, das von dem zweiten Ultraschallwandler empfangen wird, wobei die Ultraschalllaufzeit bestimmt wird. Von dem zweiten Ultraschallwandler kann ein Ultraschallsignal ausgesendet werden, das von dem ersten Ultraschallwandler empfangen wird, wobei ebenfalls die Ultraschalllaufzeit bestimmt wird. Aus den gemessenen Ultraschalllaufzeiten und/oder aus der Differenz der gemessenen Ultraschalllaufzeiten und/oder der Differenz der Kehrwerte der gemessenen Ultraschalllaufzeiten können die Fließgeschwindigkeit und/oder eine proportionale Größe zur Fließgeschwindigkeit, insbesondere ein Durchfluss, bestimmt werden. In vorteilhafter Weise ermöglicht die Bildung der Differenz der gemessenen Ultraschalllaufzeiten und/oder der Differenz der Kehrwerte der gemessenen Ultraschalllaufzeiten eine von der Ultraschallgeschwindigkeit unabhängige Bestimmung der Fließgeschwindigkeit oder einer proportionalen Größe zur Fließgeschwindigkeit, insbesondere dem Durchfluss.

Ferner kann mithilfe einer mathematischen Kompensation der Fluiddruck aus den gemessenen Ultraschalllaufzeiten und/oder aus einer Laufzeitdifferenz der gemessenen Ultraschalllaufzeiten und/oder aus einer Differenz der Kehrwerte der gemessenen Ultraschalllaufzeiten und/oder aus einer Laufzeitsumme der gemessenen Ultraschalllaufzeiten und/oder aus einer Summe der Kehrwerte der gemessenen Ultraschalllaufzeiten und/oder aus einem Mittelwert der gemessenen Ultraschalllaufzeiten ermittelt werden. In vorteilhafter Weise kann die Ultraschallgeschwindigkeit über die Summe der gemessenen Ultraschalllaufzeiten und/oder die Summe der Kehrwerte der gemessenen Ultraschalllaufzeiten oder über den Mittelwert der gemessenen Ultraschalllaufzeiten, unabhängig von der Fließgeschwindigkeit oder einer proportionalen Größe zur Fließgeschwindigkeit, insbesondere dem Durchfluss, ermittelt werden.

Ferner kann die Ultraschallmessstrecke schräg mit einem Winkel zur Fließrichtung des Fluides angeordnet sein und/oder ein oder mehrfach über Reflektoren umgelenkt werden.

Erfindungsgemäß wird eine Temperatur oder eine Temperaturänderung, insbesondere eine Temperaturänderung der Temperatur zu einer Referenztemperatur, gemessen und für die mathematische Kompensation genutzt.

Erfindungsgemäß ist diese Temperatur die Temperatur des Fluides und/oder die Temperaturänderung die Temperaturänderung des Fluides.

Zweckmäßigerweise kann ein Anschlussgehäuse mit Taschen für die Ultraschallwandler vorgesehen sein und/oder die Ultraschallwandler können jeweils ein Ultraschallwandlergehäuse jeweils mit einer Wandung mit einer Dicke aufweisen, die von mindestens einem Ultraschallsignal durchschallt wird.

Die mathematische Kompensation kann ausschließlich auf Basis mathematischer Berechnungen erfolgen.

Des Weiteren kann die mathematische Kompensation mindestens eine Eingangsgröße und mindestens eine Ausgangsgröße aufweisen, wobei die mindestens eine Ausgangsgröße mithilfe einer Funktion aus der mindestens einen Eingangsgröße berechnet wird.

In einer vorteilhaften Ausgestaltung kann die mindestens eine Ausgangsgröße der mathematischen Kompensation unabhängig von Referenzmessungen und/oder unabhängig von Kennfeldermittlungen berechnet werden.

Ferner kann die mindestens eine Eingangsgröße auf einem Kennfeld und/oder einer Kennlinie und/oder einem Messwert und/oder empirischen Daten und/oder einer Vergleichsmessung und/oder einer Kalibrierung beruhen.

Die mindestens eine Ausgangsgröße kann auch auf mindestens einer geometrischen Beziehung, insbesondere mindestens einer trigonometrischen Beziehung und/oder mindestens einem linearen Zusammenhang und/oder mindestens einem nichtlinearen Zusammenhang und/oder mindestens einer Materialkonstante und/oder mindestens einer Naturkonstante und/oder mindestens einem Algorithmus und/oder einer mindestens analytischen oder numerischen Berechnung und/oder einer mindestens numerischen Simulation beruhen.

In vorteilhafter Weise kann die mathematische Kompensation mindestens einen Einfluss aus der nachfolgenden Gruppe von Einflüssen betreffen:
- eine Dicke mindestens einer Wandung,
- eine Dickenänderung mindestens einer Wandung,
- eine Ultraschallgeschwindigkeit mindestens einer Wandung,
- eine Ultraschallgeschwindigkeitsänderung mindestens einer Wandung,
- einer Ultraschallgeschwindigkeit des Fluides,
- eine Ultraschallgeschwindigkeitsänderung des Fluides,
- die Fließgeschwindigkeit,
- eine Länge oder Längenänderung der Ultraschallmessstrecke aufgrund einer thermischen Ausdehnung, vorzugsweise des Anschlussgehäuses, auf Basis einer Temperatur oder einer Temperaturänderung, wobei vorzugsweise die Temperatur oder die Temperaturänderung des Anschlussgehäuses der Temperatur oder der Temperaturänderung des Fluides entsprechen kann,
- ein Kippen eines Ultraschallwandlers um einen Winkel zur Ultraschallmessstrecke,
- eine Winkeländerung des Winkels,
- eine Lage mindestens eines Ultraschallwandlers in Richtung der Ultraschallmessstrecke,
- eine Lageänderung mindestens eines Ultraschallwandlers in Richtung der Ultraschallmessstrecke,
- eine Lage mindestens eines Ultraschallwandlers quer zur Ultraschallmessstrecke und entlang einer Ebene, die von der Ultraschallmessstrecke und der Achse des Anschlussgehäuses gebildet wird,
- eine Lageänderung mindestens eines Ultraschallwandlers quer zur Ultraschallmessstrecke und entlang einer Ebene, die von der Ultraschallmessstrecke und der Achse des Anschlussgehäuses gebildet wird,
- eine Lage mindestens eines Ultraschallwandlers quer zur Ultraschallmessstrecke und quer zur Achse des Anschlussgehäuses,
- eine Lageänderung mindestens eines Ultraschallwandlers quer zur Ultraschallmessstrecke und quer zur Achse des Anschlussgehäuses,
- eine Laufzeitkomponente aufgrund des Durchflusses und/oder
- eine Laufzeitkomponentenänderung aufgrund des Durchflusses.

Zweckmäßig kann die Latenz der Signalverarbeitung oder eine Änderung derselben durch eine Differenzbildung mindestens einer gemessenen Ultraschalllaufzeit und mindestens einer Latenzkomponente kompensiert werden.

Beispielsweise kann die mindestens eine Latenzkomponente aus dem zeitlichen Versatz zwischen einem Sendesignal und dem gesendeten Ultraschallsignal und/oder dem zeitlichen Versatz zwischen einem Empfangssignal und dem empfangenen Ultraschallsignal bestimmt werden.

Ferner kann auf Basis einer Lage und/oder einer Lageänderung und/oder des Winkels und/oder der Winkeländerung eines Ultraschallwandlers, die Länge der Ultraschallmessstrecke und/oder eine Längenänderung der Ultraschallmessstrecke und/oder der Winkel und/oder eine Winkeländerung der Ultraschallmessstrecke ermittelt werden.

In einer weiteren Ausgestaltung kann ein Fluiddruck auf Basis einer Look-Up-Table und/oder eines Kennfelds und/oder einer Referenzmessung und/oder einer Kalibrierung ermittelt werden, wobei der ermittelte Fluiddruck als die mindestens eine Eingangsgröße zur Bestimmung des Fluiddrucks herangezogen wird.

Erfindungsgemäß umfasst ein Ultraschallfluidzähler, für die Installation in einem Fluidversorgungsnetz: ein Anschlussgehäuse mit einem Einlass und einem Auslass, mindestens eine im Anschlussgehäuse vorgesehenen Ultraschallmessstrecke, entlang welcher mindestens eine Ultraschalllaufzeit eines entlang der Ultraschallmessstrecke laufenden Ultraschallsignals im Fluid gemessen wird, mindestens einen ersten und zweiten Ultraschallwandler, wobei der jeweils erste oder zweite Ultraschallwandler das entlang der Ultraschallmessstrecke laufende Ultraschallsignals jeweils empfängt oder aussendet und eine Steuer- und Recheneinheit. Gemäß der Erfindung ist die Steuer- und Recheneinheit dazu hergerichtet, das Verfahren zur Ermittlung des Fluiddrucks durchzuführen. Die Steuer- und Recheneinheit kann auch dazu hergerichtet sein, Daten, insbesondere die gemessene Ultraschalllaufzeit an ein Headend weiterzuleiten, wobei das Headend dazu hergerichtet ist, das Verfahren zur Ermittlung des Fluiddrucks durchzuführen.

Bei dem Ultraschallfluidzähler kann die Ultraschallmessstrecke in einem, vorzugsweise spitzen, Winkel zur Achse des Anschlussgehäuses angeordnet sein.

Es kann weiterhin ein Temperatursensor zur Erfassung der Temperatur des Fluides vorgesehen sein.

Die Ultraschallwandler können in Taschen im Anschlussgehäuse montiert sein.

In einer Ausgestaltung kann eine Mehrzahl von Ultraschallmessstrecken vorgesehen sein und eine Mehrzahl von gemessenen Ultraschalllaufzeiten und/oder Drücken und/oder Fließgeschwindigkeiten und/oder proportionaler Größen der Fließgeschwindigkeiten, insbesondere Durchflüssen, bestimmt werden.

Die Ultraschallmessstrecken können bezüglich des Querschnitts des Anschlussgehäuses in einem Winkel zueinander angeordnet sein und sich schneiden.

Es kann eine mittenbetonte Bestimmung der Drücke und/oder Fließgeschwindigkeiten und/oder der proportionalen Größen der Fließgeschwindigkeiten, insbesondere der Durchflüsse, erfolgen.

Ferner kann ein gewichteter Mittelwert, vorzugsweise ein gleichgewichteter Mittelwert, der gemessenen Ultraschalllaufzeiten und/oder ein gewichteter Mittelwert, vorzugsweise ein gleichgewichteter Mittelwert, der Drücke und/oder ein gewichteter Mittelwert, vorzugsweise ein gleichgewichteter Mittelwert, der Fließgeschwindigkeiten und/oder der proportionalen Größen zur Fließgeschwindigkeit, insbesondere der Durchflüsse, bestimmt werden.

### Beschreibung der Erfindung anhand von Ausführungsbeispielen

Zweckmäßige Ausgestaltungen der vorliegenden Erfindung werden anhand von Zeichnungsfiguren nachstehend näher erläutert. Es zeigen:
- Fig. 1: eine vereinfachte Längsschnittdarstellung eines Beispiels eines Ultraschallfluidzählers,
- Fig. 2: eine vereinfachte Teillängsschnittdarstellung des Beispiels nach Fig. 1 eines Ultraschallwandlers des Ultraschallfluidzählers,
- Fig. 3: eine stark vereinfachte, schematische Darstellung einer Steuer- und Recheneinheit eines Ultraschallfluidzählers,
- Fig. 4: eine schematische Darstellung eines Beispiels eines Verfahrens zur Ermittlung des Fluiddrucks gemäß der vorliegenden Erfindung.
- Fig. 5: eine schematische Darstellung eines Beispiels eines Verfahrens zur Ermittlung des Fluiddrucks nach Fig. 4 für verschiedene Einflüsse gemäß der vorliegenden Erfindung,
- Fig. 6: eine vereinfachte Querschnittdarstellung des Beispiels eines Ultraschallfluidzählers nach Fig. 1.

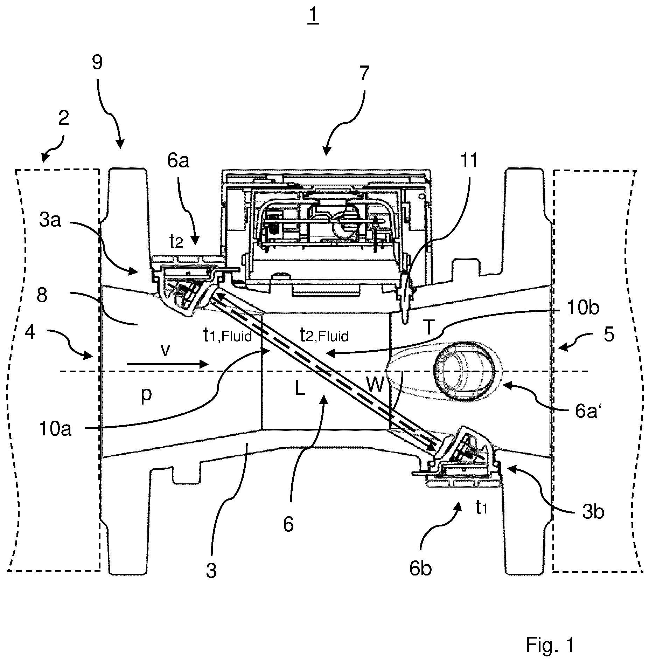

Bezugsziffer 1 in Fig. 1 zeigt einen Ultraschallfluidzähler zur Ermittlung des Fluiddrucks p und der Fließgeschwindigkeit v eines Fluides 8 in einem Fluidversorgungsnetz 2 für Fluid 8, z. B. Wasser. Der Ultraschallfluidzähler 1 ist dazu vorgesehen, in das Fluidversorgungsnetz 2, z. B. ein Rohrleitungssystem, installiert zu werden. Es ist ein Anschlussgehäuse 3 mit einem Einlass 4 und einem Auslass 5 vorgesehen, wobei das Anschlussgehäuse 3 jeweils einen Flansch 9 an der Einlass- und Auslassseite zum Anschluss an weitere Elemente des Fluidversorgungsnetzes 2 aufweist. In einer alternativen Ausgestaltung können statt Flansche 9 auch Schraubanschlüsse oder Gewinde oder sonstige Rohranschlüsse zum Anschluss an Elemente des Fluidversorgungsnetzes 2 vorgesehen sein.

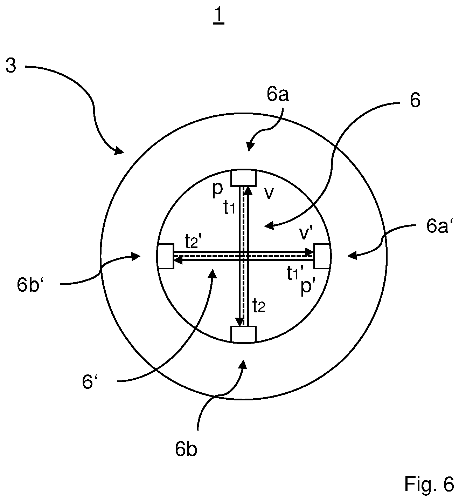

Zwischen dem Einlass 4 und dem Auslass 5 befindet sich eine Ultraschallmessstrecke 6 mit der Länge L, die z. B. unter einem Winkel W zur Längsachse des Gehäuses 3 angeordnet sein kann. Die Ultraschallmessstrecke 6 wird durch einen ersten Ultraschallwandler 6a und einen schräg gegenüberliegenden zweiten Ultraschallwandler 6b gebildet. Die Ultraschallwandler 6a, 6b sind in Taschen 3a, 3b des Anschlussgehäuses 3 montiert. Beide Ultraschallwandler 6a, 6b können jeweils ein Ultraschallsignal 10a, 10b senden und jeweils ein vom anderen Ultraschallwandler 6b, 6a gesendetes Ultraschallsignal 10b, 10a empfangen. Die gesendeten und empfangenen Ultraschallsignale 10a, 10b werden mithilfe einer Steuer- und Recheneinheit 7 erfasst und ausgewertet. In alternativen Ausgestaltungen kann die Steuer- und Recheneinheit 7 auch gesendete und/oder empfangene Ultraschallsignale 10a, 10b an ein nicht dargestelltes Headend drahtlos oder drahtgebunden weiterleiten, wobei das Headend dazu hergerichtet ist, die gesendeten und empfangenen Ultraschallsignale 10a, 10b auszuwerten. Weiterhin ist an dem Anschlussgehäuse 3 ein Temperatursensor 11 zur Erfassung der Temperatur T des Fluides 8 vorgesehen. Optional kann eine zweite, in Fig. 1 nicht dargestellte Ultraschallmessstrecke vorhanden sein, die durch einen zusätzlichen Ultraschallwandler 6a' und einen, in Fig. 1 ebenfalls nicht dargestellten, Ultraschallwandler 6b' (s. Fig. 6) gebildet wird.

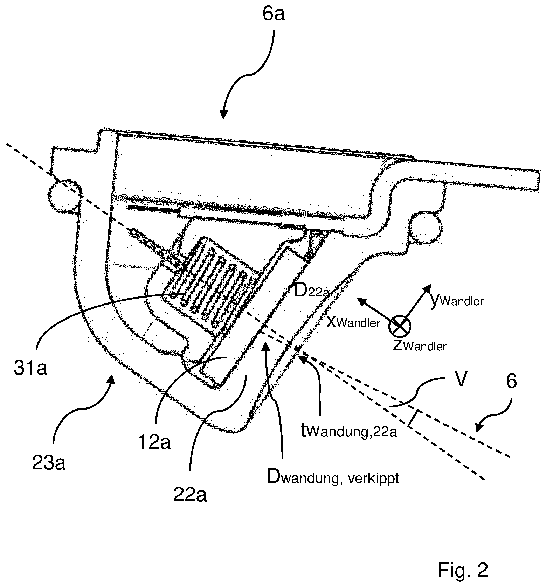

Fig. 2 zeigt den Ultraschallwandler 6a des Ultraschallzählers 1 in vergrößerter Darstellung. Der Ultraschallwandler 6a weist einen scheibenförmigen Wandlerkörper 12a in Form eines Piezoelements mit nicht dargestellten Kontaktelektroden zur Erzeugung eines Ultraschallsignals 10a bzw. zum Erfassen eines Ultraschallsignals 10b auf. Der Wandlerkörper 12a befindet sich in einem Wandlergehäuse 23a und wird über eine Feder 31a an die Innenseite einer Wandung 22a des Wandlergehäuses 23a gedrückt, sodass dieser vorzugsweise ohne Spalt an der Wandung 22a anliegt. Die Wandung 22a mit einer Dicke D₂₂ₐ wird von den Ultraschallsignalen 10a, 10b durchschallt. Das Wandlergehäuse 23a besteht vorzugsweise aus Kunststoff. Der Ultraschallwandler 6b ist gleich aufgebaut und weist ebenfalls einen Wandlerkörper 12b, eine Feder 31b und ein Wandlergehäuse 23b mit einer Wandung 22b mit einer Dicke D_{22b} auf.

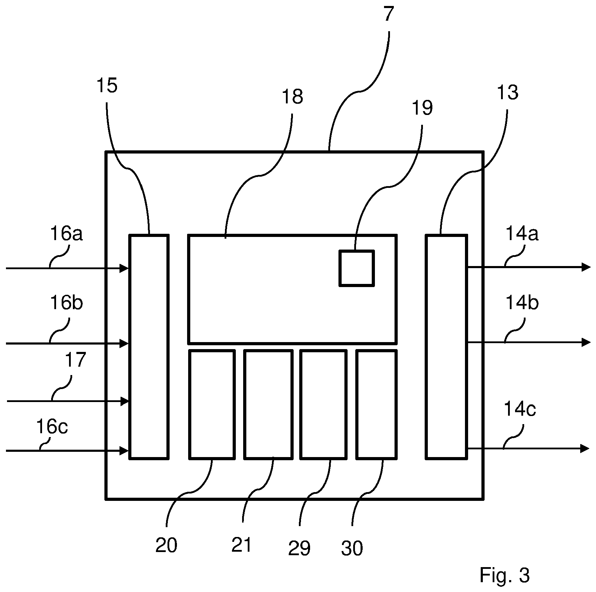

Fig. 3 zeigt ein Beispiel einer Steuer- und Recheneinheit 7 des Ultraschallzählers 1, welche Ausgänge 13 zum Generieren von Sendesignale 14a, 14b zur Erzeugung des jeweiligen Ultraschallsignals 10a, 10b sowie Eingänge 15 zum Erfassen von Empfangssignalen 16a, 16b des jeweils empfangenen Ultraschallsignals 10a, 10b sowie zum Erfassen eines Temperatursignals 17 des Temperatursensors 11 aufweist. Ferner kann ein Sendesignal 14c an das nicht dargestellte Headend gesendet und ein Empfangssignal 16c von dem Headend empfangen werden. Weiterhin ist ein Prozessor 18, z. B. ein Mikrocontroller mit einem Oszillator 19, z. B. einem Schwingquarz zur Erzeugung einer Zeitreferenz vorgesehen. Die Steuer- und Recheneinheit 7 kann zudem einen Speicher 20, einen Akkumulator 21, einen FPGA 29 oder andere elektrische Elemente oder Schaltungen 30, beispielsweise Kommunikationsmodule, zum drahtlosen oder drahtgebundenen Senden und Empfangen von Daten, z. B. drahtlos über Funkprotokolle oder drahtgebunden über MBus oder LBus, Zeitempfangsmodule, z. B. für DCF77-Signale oder Positionsmodule, z. B. GPS, aufweisen. Das Kommunikationsmodul kann ferner auch dazu hergerichtet sein, Daten über den Ausgang 13 an das Headend zu senden bzw. über den Eingang 15 von diesem zu empfangen. Mithilfe einer auf dem Prozessor 18 und/oder dem FPGA 29 und/oder dem Headend stattfindenden Signalverarbeitung und/oder der Zeitreferenz durch den Oszillator 19 können jeweils die Zeitpunkte t_{gesendet} und t_{empfangen} der gesendeten Sendesignale 14a, 14b und der empfangenen Empfangssignale 16a, 16b ermittelt und daraus die Ultraschalllaufzeiten t₁ und/oder t₂ gemessen und beispielsweise wie folgt berechnet werden: ${t}_{1} = {t}_{16 a , empfangen} - {t}_{14 a , gesendet}$ ${t}_{2} = {t}_{16 b , empfangen} - {t}_{14 b , gesendet}$

Die gemessenen Ultraschalllaufzeiten t₁, t₂ entsprechen näherungsweise den Fluidlaufzeiten t_{1,Fluid}, t_{2,Fluid}, d. h. den Ultraschalllaufzeiten durch das Fluid 8. Sind die Länge L und der Winkels W bekannt und unveränderlich, können die Fluidlaufzeiten t_{1,Fluid}, t_{2,Fluid} mit der Ultraschallgeschwindigkeit des Fluides c_{Fluid} beispielsweise berechnet werden gemäß: ${t}_{1} \approx {t}_{1 , Fluid} = \frac{L}{{c}_{Fluid} + v ⋅ cos \left(W\right)}$ und ${t}_{2} \approx {t}_{2 , Fluid} = \frac{L}{{c}_{Fluid} - v ⋅ cos \left(W\right)}$

Es ist weiterhin bekannt, die Fließgeschwindigkeit v durch Differenzbildung der Kehrwerte der gemessenen Ultraschalllaufzeiten t₁, t₂ beispielsweise wie folgt zu berechnen: $v = \frac{{t}_{2} - {t}_{1}}{{t}_{1} ⋅ {t}_{2}} ⋅ \frac{L}{2 cos \left(W\right)}$ wobei die Ultraschallgeschwindigkeit des Fluides c_{Fluid} durch die Differenzbildung eliminiert wird.

Bei bekannter Fließgeschwindigkeit v kann die Ultraschallgeschwindigkeit des Fluides c_{Fluid} (durch Umstellen obenstehender Formeln nach c_{Fluid}) über t₁ oder t₂ beispielsweise wie folgt berechnet werden: ${c}_{Fluid} = \frac{L}{{t}_{1}} - v ⋅ cos \left(W\right)$ bzw. ${c}_{Fluid} = \frac{L}{{t}_{2}} + v ⋅ cos \left(W\right)$

Alternativ kann die Ultraschallgeschwindigkeit des Fluides c_{Fluid} über die Summe der Kehrwerte der gemessenen Ultraschalllaufzeiten t₁, t₂ beispielsweise wie folgt berechnet werden: ${c}_{Fluid} = \frac{L}{2} \left(\frac{1}{{t}_{1}}+\frac{1}{{t}_{2}}\right)$ wobei der Winkel W und die Fließgeschwindigkeit v eliminiert werden können.

Die Ultraschallgeschwindigkeit des Fluides c_{Fluid} ist abhängig von der Temperatur T und dem Fluiddruck p, wobei eine Druckänderung Δp nur zu einer sehr geringen Änderung der Ultraschallgeschwindigkeit des Fluides Δc_{Fluid} führt. Bei bekannter bzw. ermittelter Ultraschallgeschwindigkeit des Fluides c_{Fluid} und bekannter bzw. gemessener Temperatur T kann der Fluiddruck als Funktion p = f(c_{Fluid}, T) bestimmt werden. Bereits geringe Laufzeitabweichungen der gemessenen Ultraschalllaufzeiten t₁, t₂ zu den Fluidlaufzeiten t_{1,Fluid}, t_{2,Fluid} führen zu größeren Abweichungen bei der Druckbestimmung.

Bei der Messung der Ultraschalllaufzeiten t₁, t₂ können jedoch Abweichungen auftreten. Derartige Abweichungen der gemessenen Ultraschalllaufzeiten t₁ und/oder t₂ können durch verschiedene Einflüsse, wie beispielsweise die Länge L der Ultraschallmessstrecke 6 oder eine Längenänderung ΔL derselben, einer Ultraschalllaufzeitkomponente entlang der Ultraschallmessstrecke 6, die nicht im Fluid 8 liegt, oder eine Änderung derselben, eine Ultraschalllaufzeitkomponente innerhalb der Ultraschallmessstrecke, die im Fluid 8 liegt, oder eine Änderung derselben, eine Befestigung und/oder Lage des Ultraschallwandlers zur Ultraschallmessstrecke 6 oder eine Änderung derselben, eine Latenz der Signalverarbeitung oder eine Änderung derselben und/oder einen Durchfluss oder eine Änderung desselben, verursacht werden. Während diese Laufzeitabweichungen bei der Bestimmung der Fließgeschwindigkeit v aufgrund der Differenzbildung teilweise kompensiert werden können, führen die Einflüsse bei der Bestimmung der Ultraschallgeschwindigkeit des Fluides c_{Fluid} bzw. der daraus abgeleiteten Druckermittlung ohne weitere Maßnahmen jedoch zu größeren Messabweichungen.

In den folgenden Ausführungsbeispielen werden daher erfindungsgemäße Verfahren 28 zur Bestimmung des Fluiddrucks p angewendet.

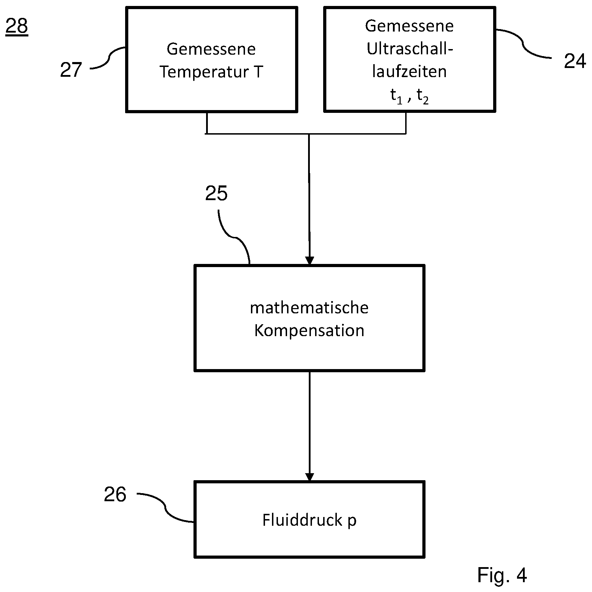

Fig. 4 zeigt eine schematische Darstellung eines erfindungsgemäßen Verfahrens 28. Aus einer gemessenen Ultraschalllaufzeit 24, t₁ oder t₂ oder aus den gemessenen Ultraschalllaufzeiten 24, t₁ und t₂, und einer gemessenen Temperatur 27, der Temperatur T des Fluides 8, wird über eine mathematische Kompensation 25 der Fluiddruck 26 ermittelt.

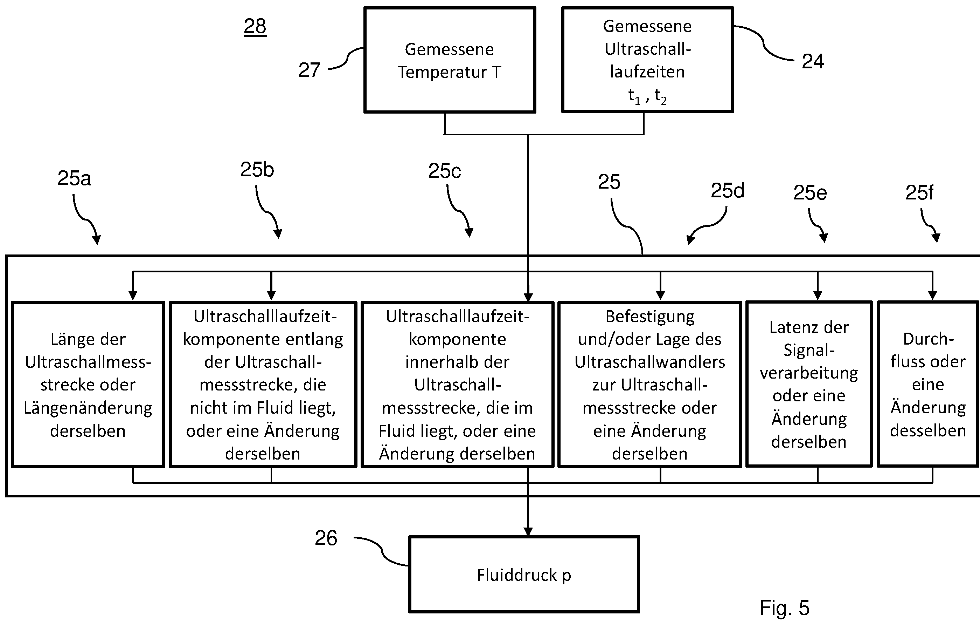

Fig. 5 zeigt eine Ausgestaltung des erfindungsgemäßen Verfahrens 28. Das Verfahren 28 kann eine mathematische Kompensation 25 von einem oder mehreren Einflüssen 25a-25f umfassen. Die Kompensation kann auf rein mathematischen Berechnungen, d. h. analytischen oder numerischen Berechnungen, beruhen. Die Ausgangsgröße Y der Kompensation 25 kann dabei als Funktion f der Eingangsgrößen (X₁, X₂, ...X_{N}) gemäß Y = f(X₁, X₂, ...X_{N}) berechnet werden. Dabei können die Eingangsgrößen (X₁, X₂, ...X_{N}) der Berechnungen auf Messwerten basieren, es ist jedoch insbesondere keine Referenzmessung der Ausgangsgrößen Y erforderlich.

Die nachfolgenden Formeln sind so zu verstehen, dass diese mit obenstehenden Formeln der Ultraschalllaufzeiten t₁ und/oder t₂, der Laufzeitdifferenzen bzw. Differenzen der Kehrwerte und/oder der Laufzeitsummen bzw. Summen der Kehrwerte kombinierbar sind.

Die Steuer- und Recheneinheit 7 ist dazu hergerichtet, die Berechnungen des Verfahrens 28 durchzuführen und/oder die Daten an ein Headend weiterzuleiten, wobei das Headend dazu hergerichtet ist, das Verfahren 28 zur Ermittlung des Fluiddrucks p durchzuführen. Alternativ oder zusätzlich können auch Daten vom Headend an die Steuer- und Recheneinheit 7 übertragen werden. Daten können beispielsweise die gemessenen Ultraschalllaufzeiten t₁ und/oder t₂ sein. Alternativ kann auch die mathematische Kompensation 25 auf der Steuer- und Recheneinheit 7 und/oder auf dem Headend durchgeführt werden, wobei die Daten die Ergebnisse oder Teilergebnisse der mathematischen Kompensation 25 sein können.

### Temperaturabhängige Länge oder Längenveränderung der Ultraschallmessstrecke 25a:

In einem ersten Ausführungsbeispiel können die Laufzeitabweichungen aufgrund der Längenausdehnung des Gehäuses und damit der Längenänderung ΔL der Ultraschallmessstrecke L korrigiert werden, wobei die korrigierte Ultraschallmessstrecke beispielsweise wie folgt berechnet werden kann: ${L}_{korrigiert} = L + ΔL$

Die Längenänderung kann durch thermische Ausdehnung hervorgerufen werden, wobei die Länge L in diesem Fall eine bekannte Länge bei einer Referenztemperatur (z. B. der Standardreferenztemperatur T_{ref} = 20°C) und ΔT die Temperaturdifferenz der Gehäusetemperatur T_{Gehäuse} zur Standardreferenztemperatur T_{ref} sein können und beispielsweise folgt berechnet werden können: ${ΔT}_{Gehäuse} = {T}_{Gehäuse} - {T}_{ref}$

Bei der Gehäusetemperatur T_{Gehäuse} kann es sich unter der Annahme, dass das Gehäuse die gleiche Temperatur wie das Fluid 8 aufweist, um die gemessene Temperatur T des Fluides 8 handeln. Alternativ können jedoch auch weitere Temperatursensoren im oder am Anschlussgehäuse 3 vorhanden sein, die zur Bestimmung der Gehäusetemperatur T_{Gehäuse} herangezogen werden.

Bei einer Variante der Kompensation der thermischen Längenausdehnung mit homogener Temperaturänderung des Anschlussgehäuses 3 kann die Längenänderung ΔL vereinfacht mit einem linearen Ausdehnungskoeffizienten α_{Gehäuse}, welcher abhängig vom Gehäusematerial ist, beispielsweise wie folgt berechnet werden: $ΔL = L ⋅ {α}_{Gehäuse} ⋅ {ΔT}_{Gehäuse}$

Je nach Material des Anschlussgehäuses 3 kann ein linearer Ausdehnungskoeffizient beispielsweise einen Wert von α_{Gehäuse} = 10,5·10⁻⁶ K⁻¹ (z. B. für Gußeisen) aufweisen. In einer alternativen Ausgestaltung kann das Gehäuse auch Stahl, beispielsweise Edelstahl, oder Kunststoff oder ein sonstiges für Fluidleitungen geeignetes Material oder eine Materialkombination aufweisen.

In einer anderen Variante der Korrektur der thermischen Längenausdehnung können neben einem linearen Ausdehnungskoeffizienten zusätzlich ein oder mehrere nichtlineare Ausdehnungskoeffizienten (β_{Gehäuse}, γ_{Gehäuse}, ...) bei der Berechnung berücksichtigt werden. Ebenfalls ist eine numerische Berechnung mit Finite-Elemente-Methoden (FEM) denkbar, beispielsweise bei einer inhomogenen Wärmeverteilung. Dabei kann für die Berechnung der Längenänderung beispielsweise auch ein Temperaturgradient innerhalb des Gehäuses berücksichtigt werden, der beispielsweise auf Basis gemessener Temperaturen mehrerer Temperatursensoren simuliert wird.

### Ultraschalllaufzeitkomponente entlang der Ultraschallmessstrecke, die nicht im Fluid liegt oder eine Änderung derselben 25b:

In einem weiteren Ausführungsbeispiel kann eine Ultraschalllaufzeitkomponente t_{Korrektur} entlang der Ultraschallmessstrecke, die nicht im Fluid liegt, zur Kompensation bzw. Korrektur der gemessenen Ultraschalllaufzeiten t₁ und/oder t₂ beispielsweise wie folgt berechnet werden: ${t}_{1 , Fluid , korrigiert} = {t}_{1} - {t}_{Korrektur}$ bzw. ${t}_{2 , Fluid , korrigiert} = {t}_{2} - {t}_{Korrektur}$

Die Ultraschalllaufzeitkomponente t_{Korrektur} kann, wie in Fig. 2 gezeigt die Ultraschalllaufzeit t_{Wandung,22a} durch die Wandung 22a des Wandlergehäuses 23a des Ultraschallwandlers 6a sein. Mit der Dicke D₂₂ₐ der Wandung und der materialabhängigen Ultraschallgeschwindigkeit c_{wandung,22a} kann die Ultraschalllaufzeitkomponente der Wandung beispielsweise wie folgt berechnet werden: ${t}_{Wandung , 22 a} = \frac{{D}_{22 a}}{{c}_{Wandung , 22 a}}$

Sind die Ultraschalllaufzeitkomponenten der Wandungen beider Ultraschallwandler 6a, 6b gleich, kann beispielsweise gelten: ${t}_{Wandung} = {t}_{Wandung , 22 a} = {t}_{Wandung , 22 b}$

Die korrigierten Ultraschalllaufzeitkomponenten können dann beispielsweise wie folgt berechnet werden: ${t}_{1 , Fluid , korrigiert} = {t}_{1} - 2 ⋅ {t}_{Wandung}$ bzw. ${t}_{2 , Fluid , korrigiert} = {t}_{2} - 2 ⋅ {t}_{Wandung}$

In einer anderen Variante können die Ultraschalllaufzeitkomponenten der Wandungen beider Ultraschallwandler 6a, 6b auch unterschiedlich sein, beispielsweise aufgrund unterschiedlicher Dicken D₂₂ₐ, D_{22b} und/oder unterschiedlicher Ultraschallgeschwindigkeiten c_{wandung,22a}, c_{wandung,22b}. In diesem Fall können die Ultraschalllaufzeiten beispielsweise wie folgt berechnet werden: ${t}_{1 , Fluid , korrigiert} = {t}_{1} - {t}_{Wandung , 22 a} - {t}_{Wandung , 22 b}$ bzw. ${t}_{2 , Fluid , korrigiert} = {t}_{2} - {t}_{Wandung , 22 a} - {t}_{Wandung , 22 b}$

In einem weiteren Ausführungsbeispiel kann die thermische Ausdehnung der Wandung 22a in Form einer Dickenänderung ΔD₂₂ₐ der Wandung 22a beispielsweise wie folgt berechnet werden: ${ΔD}_{22 a} = {D}_{22 a} ⋅ {α}_{Wandung , 22 a} ⋅ ΔT$ mit dem linearen Ausdehnungskoeffizienten α_{Wandung,22a} und der Dicke D₂₂ₐ, die in diesem Fall eine bekannte oder ermittelte Dicke bei einer Referenztemperatur (z. B. der Standardreferenztemperatur T_{ref} = 20°C) sein kann, wobei ΔT die Temperaturdifferenz der Wandungstemperatur T_{Wandung,22a} zur Standardreferenztemperatur T_{ref} ist. Ebenso können zusätzlich nichtlineare Ausdehnungskoeffizienten (β_{Wandung,22a}, γ_{Wandung, 22a}, ...) bei der Berechnung berücksichtigt oder FEM genutzt werden. Die Wandungstemperatur T_{Wandung,22a} kann der Temperatur T des Fluides 8 entsprechen. Es ist jedoch auch denkbar, weitere Temperatursensoren an den Wandungen vorzusehen. In gleicher Weise kann beispielsweise eine Dickenänderung ΔD_{22b} der Wandung 22b mit einem Ausdehnungskoeffizienten α_{Wandung,22b} und einer Wandungstemperatur T_{Wandung,22b} bestimmt werden oder beide Dickenänderung ΔD₂₂ₐ, ΔD_{22b} können gleich sein. Die Dicken D₂₂ₐ, D_{22b} und/der Dickenänderung ΔD₂₂ₐ, ΔD_{22b} können auch zu einer Längenänderung ΔL der Ultraschallmessstrecke führen und zu deren Korrektur herangezogen werden.

In einer anderen Ausführung kann eine thermische bedingte Änderung der Ultraschallgeschwindigkeiten Δc_{wandung,22a}, Δc_{wandung,22b} der Wandungen 22a, 22b berücksichtigt werden. Alternativ können auch Materialunterschiede zwischen z. B. verschiedenen Losnummern bei der Fertigung zu einer Änderung der Ultraschallgeschwindigkeiten führen.

### Ultraschalllaufzeitkomponente innerhalb der Ultraschallmessstrecke, die im Fluid liegt, oder eine Änderung derselben 25c:

In einer weiteren Ausführung kann auch eine Ultraschalllaufzeitkomponente innerhalb der Ultraschallmessstrecke, die im Fluid liegt, oder eine Änderung derselben 25c kompensiert werden. Es kann beispielsweise eine korrigierte Ultraschalllaufzeit durch das Fluid aufgrund einer Änderung der Ultraschallgeschwindigkeit des Fluides Δc_{Fluid} wie folgt berechnet werden: ${t}_{1 , Fluid , korrigiert} = \frac{L}{\left({c}_{Fluid}+{Δc}_{Fluid}\right) + v ⋅ cos \left(W\right)}$ bzw. ${t}_{2 , Fluid , korrigiert} = \frac{L}{\left({c}_{Fluid}+{Δc}_{Fluid}\right) - v ⋅ cos \left(W\right)}$

Eine Änderung der Ultraschallgeschwindigkeit Δc_{Fluid} ist in diesem Fall keine Änderung aufgrund einer Änderung des Fluiddrucks p, sondern kann beispielsweise aufgrund einer Änderung der Zusammensetzung des Fluides entstehen (z. B. eine Änderung der Härte von Wasser, d. h. dem Kalkgehalt des Wassers).

Alternativ kann sich auch das Fluid selbst ändern, z. B. Öl statt Wasser.

### Befestigung/Lage des Ultraschallwandlers zur Ultraschallmessstrecke 6 oder eine Änderung derselben 25d:

In einer weiteren Ausführung kann die Befestigung oder die Lage eines Ultraschallwandlers 6a, 6b zur Ultraschallmessstrecke 6 oder eine Änderung derselben 25d kompensiert werden. Ein Ultraschallwandler ist in einem Beispiel um den Winkel V zur Ultraschallmessstrecke 6 gekippt (s. Fig. 2). Die Länge durch die Wandungen D_{Wandung,verkippt}, die die Ultraschallsignale 10a,10b durchlaufen, ist in diesem Fall größer und kann beispielsweise wie folgt berechnet werden: ${D}_{Wandung , verkippt} = \frac{D}{cos \left(V\right)}$

Der Winkel V kann bei beiden Ultraschallwandlern 6a, 6b gleich oder unterschiedlich sein, wobei mit oben beschriebenen Formeln dieser Einfluss für beide Ultraschallwandler gleich oder unterschiedlich berechnet werden kann. Die Dicke D kann in diesem Fall die Dicke einer Wandung D₂₂ₐ, D_{22b} sein. Es kann auch eine Winkeländerung ΔV zu einer bekannten Verkippung V auftreten.

In einem anderen Beispiel ist ein Ultraschallwandler 6a, 6b in Richtung der Ultraschallmessstrecke 6 um die Lage x_{Wandler} verschoben. Die Länge der Ultraschallmessstrecke kann damit beispielsweise wie folgt berechnet werden. ${L}_{Wandler , Δx verschoben} = L - {x}_{Wandler}$

Die Länge L kann in diesem Fall die Länge der Ultraschallmessstrecke bei nicht verschobenem Ultraschallwandler 6a, 6b bzw. die nominelle Länge L sein. Es können auch beide Ultraschallwandler 6a, 6b verschoben sein, wobei sich der Effekt der Verschiebungen teilweise aufhebt, wenn beide Ultraschallwandler 6a, 6b in die gleiche Richtung verschoben sind, und der Effekt verstärkt wird, wenn die Verschiebungen in entgegengesetzte Richtungen erfolgen.

Die Lage eines oder beider Ultraschallwandler kann auch quer zur Ultraschallmessstrecke mit y_{Wandler} verschoben sein, wodurch sich der Winkel W und die Länge L ändert. Die Winkeländerung ΔW kann in diesem Fall beispielsweise wie folgt berechnet: $ΔW = arcsin \left(\frac{{Δy}_{Wandler}}{L}\right)$

Die Längenänderung ΔL kann beispielsweise berechnet werden mit: ${ΔL}_{Wandler , y verschoben} = \sqrt{{y}_{Wandler}^{2} + {L}^{2}}$ wobei L die nominelle Länge oder eine gemessene Länge der Ultraschallmessstrecke ohne Verschiebung sein kann. Bei einer Verschiebung z_{Wandler} kann die Länge beispielsweise genauso berechnet werden wie bei einer Verschiebung y_{Wandler}, wobei der Winkel W gleich bleiben kann. Es können auch Lageänderungen Δx_{Wandler}, Δy_{Wandler}, Δz_{Wandler} bezüglich bekannter Lageabweichungen x_{Wandler}, y_{Wand-ler}, z_{Wandler} berücksichtigt werden.

Die Abweichungen der Lage der Ultraschallwandler 6a, 6b zur Ultraschallmessstrecke entsteht bespielweise aufgrund der Montage in den Taschen 3a, 3b oder einer Fertigungstoleranz der Taschen 3a, 3b.

Alternativ kann eine Lageänderung, insbesondere der dem Fluid zugewandten Fläche der Wandung 22a, 22b des Ultraschallwandlergehäuses 23a, 23b korrigiert werden. Die Lageänderung kann beispielsweise durch eine thermische Ausdehnung der Wandung 22a, 22b und/oder des Ultraschallwandlergehäuses 23a, 23b hervorgerufen werden und wie bereits beschrieben korrigiert werden.

### Latenz der Signalverarbeitung oder eine Änderung derselben 25e:

In einer anderen Ausführung können die Ultraschalllaufzeit t₁ und/oder t₂ auch um eine Latenzkomponente der Elektronik t_{Latenz} kompensiert werden. Die Latenzkomponente kann beispielsweise von den gemessenen Ultraschalllaufzeiten t₁ und/oder t₂ abgezogen werden. Die Latenzkomponente ergibt sich z. B. aus dem zeitlichen Versatz zwischen dem jeweiligen Sendesignal 14a,14b und dem jeweils gesendeten Ultraschallsignal 10a, 10b und/oder dem zeitlichen Versatz zwischen dem jeweiligen Empfangssignal 16a, 16b und dem jeweils empfangenen Ultraschallsignal 10a, 10b. Weitere Effekte können die Signalverarbeitung bei der Ermittlung der Ultraschalllaufzeiten t₁ und/oder t₂, Laufzeitdifferenzen und/oder Laufzeitsummen und/oder Different der Kehrwerte und/oder Summe der Kehrwerte sein. Im Fall einer Signalverarbeitung auf dem FPGA 29 kann die Latenzkomponente beispielsweise konstant sein, wohingegen die Latenzkomponente bei einer Signalverarbeitung auf dem Prozessor 18, z. B. einem Mikrocontroller, variabel sein kann und für jede Berechnung einzeln ermittelt werden kann. Auch eine Aufteilung der Signalverarbeitung auf den FPGA 29 mit fester Latenzkomponente und den Prozessor 18 mit variabler Latenzkomponente ist denkbar, wobei die gesamte Latenz die Summe der beiden Latenzkomponenten sein kann. Bei einer Signalverarbeitung auf einem Headend können auch Latenzen durch die Übertragung zu dem Headend entstehen und kompensiert werden.

### Durchfluss oder eine Änderung desselben 25 f:

In einer alternativen Ausgestaltung können die gemessenen Ultraschalllaufzeiten t₁ und/oder t₂ aufgrund des Durchflusses korrigiert werden mit der Laufzeitkomponente t_{Durchfluss}, die durch den Durchfluss verursacht wird. Die korrigierten Laufzeiten t_{1,Durchlfuss,korrigiert}, t_{2,Durchlfuss,korrigiert} können in diesem Fall beispielsweise wie folgt berechnet werden: ${t}_{1 , Durchfluss korrigiert} = {t}_{1} - {t}_{Durchfluss}$ bzw. ${t}_{2 , Durchfluss korrigiert} = {t}_{2} + {t}_{Durchfluss}$

Die um den Durchfluss korrigierten Laufzeiten t_{1,Durchlfuss,korrigiert}, t_{2,Durchlfuss,korrigiert} können einzeln genutzt werden, um den Fluiddruck p zu ermitteln. Alternativ können die korrigierten Laufzeiten t_{1,Durchlfuss,korrigiert}, t_{2,Durchlfuss,korrigiert} auch miteinander und/oder mit den anderen beschriebenen mathematischen Kompensationen 25 kombiniert werden.

In einer weiteren alternativen Ausgestaltung kann bei bekannter Geometrie auch die Fließgeschwindigkeit v aus dem Durchfluss oder aus einer zur Fließgeschwindigkeit v proportionalen Größe bestimmt bzw. abgeleitet werden.

In einer weiteren Ausgestaltung kann der Mittelwert t_{M} aus den gemessenen Ultraschalllaufzeiten t₁ und t₂ gebildet werden mit: ${t}_{M} = \frac{{t}_{1} + {t}_{2}}{2}$

Unter der Annahme, dass die Laufzeitkomponenten, die durch den Durchfluss verursacht werden, betragsmäßig gleich sind, kann eine mittlere Laufzeit t_{M}, die unabhängig vom Durchfluss oder der Fließgeschwindigkeit v oder einer proportionalen Größe zur Fließgeschwindigkeit v ist, beispielsweise wie folgt berechnet werden: ${t}_{M} = \frac{L}{{c}_{Fluid}}$

Damit kann die Ultraschallgeschwindigkeit des Fluides c_{Fluid} beispielsweise wie folgt berechnet werden: ${c}_{Fluid} = \frac{L}{{t}_{M}}$

### Ausführungsbeispiele der Druckermittlung mit Kennfeld oder Look-Up-Table:

In einem anderen Ausführungsbeispiel wird zunächst der Fluiddruck p_{E} auf Basis eines Kennfeldes oder einer Look-Up-Table, z. B. mit den Eingangsgrößen der gemessenen Ultraschalllaufzeiten t₁ und/oder t₂ und/oder der Temperatur T und/oder der Fließgeschwindigkeit v oder einer proportionalen Größe zur Fließgeschwindigkeit v, z. B. dem Durchfluss, ermittelt. Die Bestimmung des Fluiddrucks p_{E} kann dabei beispielsweise in einem ersten Schritt durch Referenzmessungen erfolgen. In einem zweiten Schritt kann der Fluiddruck p_{E} als Eingangsgröße für die mathematische Kompensation 25 zur Bestimmung des Fluiddrucks p dienen.

### Weiteres Ausführungsbeispiel eines Fluidzählers mit einer Mehrzahl von Ultraschallmessstrecken:

Fig. 6 zeigt einen Querschnitt eines Ultraschallfluidzählers 1, wobei neben der Ultraschallmessstrecke 6, die durch die Ultraschallwandlern 6a, 6b gebildet wird, eine Ultraschallmessstrecke 6', die durch die Ultraschallwandlern 6a', 6b' gebildet wird, vorgesehen sein kann. Von der Steuer- und Recheneinheit 7 oder dem Headend können neben den gemessenen Ultraschalllaufzeiten t₁,t₂ der ersten Ultraschallmessstrecke 6 die Ultraschalllaufzeiten t₁', t₂' der zweiten Ultraschallmessstrecke 6' gemessen werden. Ein oder mehrere mathematische Kompensationen 25 können auf einzelne, mehrere oder alle gemessenen Ultraschalllaufzeiten t₁, t₂, t₁', t₂' angewandt werden. Zusätzlich kann ein Mittelwert der gemessenen Ultraschalllaufzeiten t₁, t₂, t₁', t₂' und/oder der mit dem Verfahren 28 berechneten Drücke p, p' und/oder der Fließgeschwindigkeiten v, v' und/oder der proportionalen Größen der Fließgeschwindigkeiten v, v', z. B. der Durchflüsse, der Ultraschallmessstrecken 6, 6' bestimmt werden. Die Ultraschallmessstrecken 6, 6' sind bezüglich des Querschnitts des Gehäuses 3 vorzugsweise in einem rechten Winkel zueinander angeordnet. In anderen Ausführungen können die Ultraschallmessstrecken auch in anderen Winkel oder gegenüberliegend (180° zueinander) angeordnet sein. In Fig. 6 sind zwei Ultraschallmessstrecke 6, 6' mit jeweils zwei Ultraschallwandlern 6a, 6b, 6a', 6b' gezeigt, es kann jedoch auch eine Vielzahl von Ultraschallmessstrecken 6, 6', ..., 6" vorgesehen sein mit je zwei Ultraschallwandlern 6a, 6b, 6a', 6b', ..., 6a", 6b" wobei ebenfalls ein gewichteter Mittelwert aus der Vielzahl der gemessenen Ultraschalllaufzeiten t₁, t₂, t₁', t₂', ..., t₁ⁿ, t₂ⁿ und/oder Fluiddrücke p, p', ..., p" und/oder Fließgeschwindigkeiten v, v', ..., vⁿ und/oder der proportionalen Größen der Fließgeschwindigkeiten v, v', ..., v", z. B. der Durchflüsse, gebildet werden kann.

Die Ultraschallwandler 6b, 6a', 6b', ..., 6a", 6bⁿ können die gleichen Elemente und die gleiche Anordnung wie der, in Fig. 2 dargestellte Ultraschallwandler 6a aufweisen.

In einer weiteren alternativen Ausgestaltung kann die Ultraschallmessstrecke auch mindestens eine durch einen Reflektor bedingte Umlenkung beinhalten. Beispielsweise kann die Ultraschallmessstrecke U-förmig ausgestaltet sein, indem eine zweifache Umlenkung durch zwei Reflektoren erfolgt. Die Ultraschallmessstrecke kann dabei beispielsweise vom ersten Ultraschallwandler ausgehende quer zur Achse des Anschlussgehäuses durch das Fluid verlaufen und von einem ersten Reflektor parallel zur Achse des Anschlussgehäuses umgelenkt werden. Weiterhin kann durch einen zweiten Reflektor eine Umlenkung erfolgen, sodass die Ultraschallmessstrecke quer zur Achse des Anschlussgehäuses hin zu dem zweiten Ultraschallwandler verläuft.

Bei einer weiteren Ausgestaltung kann die Ultraschallmessstrecke auch unter einem Winkel zur Achse des Anschlussgehäuses vom ersten Ultraschallwandler zu einem Reflektor verlaufen und von dem Reflektor und einem Winkel zu dem zweiten Ultraschallwandler, so beispielsweise bei einer V-förmigen Umlenkung. Alternativ können auch mehrere Umlenkungen über eine Mehrzahl von Reflektoren jeweils unter einem Winkel zur Achse des Anschlussgehäuses erfolgen, so beispielsweise bei einer W-förmigen Umlenkung.

Die vorliegende Erfindung kann sowohl in Großwasserzählern als auch in Hauswasserzählern zum Einsatz kommen. Je nach Anwendung müssen die beschriebenen mathematischen Kompensationen 25 für die alternativen Geometrien und/oder Ultraschallmessstreckenanordnungen entsprechend angepasst werden.

Gemäß der Erfindung können die mathematischen Kompensationen 25 der Ausführungsbeispiele einzeln genutzt werden, es können jedoch auch mehrere mathematische Kompensationen 25 von einem oder mehreren Einflüssen 25a-25f nacheinander und/oder gleichzeitig angewandt und/oder kombiniert werden.

Vom Offenbarungsgehalt der Erfindung sind ausdrücklich auch Merkmalsteil- oder Unterkombinationen erfasst.

### BEZUGSZEICHENLISTE

- 1: Ultraschallfluidzähler
- 2: Fluidversorgungsnetz
- 3: Anschlussgehäuse
- 3a: Tasche
- 3b: Tasche
- 4: Einlass
- 5: Auslass
- 6: Ultraschallmessstrecke
- 6': Ultraschallmessstrecke
- 6a: erster Ultraschallwandler
- 6b: zweiter Ultraschallwandler
- 6a': Ultraschallwandler
- 6b': Ultraschallwandler
- 7: Steuer- und Recheneinheit
- 8: Fluid
- 9: Flansch
- 10a: erstes Ultraschallsignal
- 10b: zweites Ultraschallsignal
- 11: Temperatursensor
- 12a: Piezo
- 13: Ausgänge
- 14a: Sendesignale des ersten Ultraschallsignals
- 14b: Sendesignale des zweiten Ultraschallsignals
- 14c: Sendesignal
- 15: Eingänge
- 16a: Empfangssignale des ersten Ultraschallsignals
- 16b: Empfangssignale des zweiten Ultraschallsignals
- 16c: Empfangssignal
- 17: Temperatursignal
- 18: Prozessor
- 19: Oszillator
- 20: Speicher
- 21: Akkumulator
- 22a: Wandung
- 23a: Ultraschallwandlergehäuse
- 24: gemessene Ultraschalllaufzeiten
- 25: mathematische Kompensation
- 25a: Einfluss
- 25b: Einfluss
- 25c: Einfluss
- 25d: Einfluss
- 25e: Einfluss
- 25f: Einfluss
- 26: kompensierter Druck
- 27: gemessene Temperatur
- 28: Verfahren
- 29: FPGA
- 30: elektrische Schaltungen
- 31a: Feder
- D₂₂ₐ: Dicke einer Wandung
- p: Fluiddruck
- p': Fluiddruck
- p_{K}: Fluiddruck
- T: Temperatur
- t₁: gemessene Ultraschalllaufzeit
- t₂: gemessene Ultraschalllaufzeit
- t₁': gemessene Ultraschalllaufzeit
- t₂': gemessene Ultraschalllaufzeit
- t_{1,Fluid}: Fluidlaufzeit
- t_{2,Fluid}: Fluidlaufzeit
- t_{Wandung,22a}: Laufzeit durch Wandung
- V: Winkel eines Ultraschallwandlers
- v: Fließgeschwindigkeit
- v': Fließgeschwindigkeit
- W: Winkel einer Ultraschallmessstrecke
- x_{Wandler}: Lage eines Ultraschallwandlers
- y_{Wandler}: Lage eines Ultraschallwandlers
- z_{Wandler}: Lage eines Ultraschallwandlers

## Patentansprüche

1. Verfahren (28) zur Ermittlung des Fluiddrucks p in einem Fluidversorgungsnetz (2) für Fluid (8), mit einem ersten Ultraschallwandler (6a) und einem zweiten Ultraschallwandler (6b), bei dem
von mindestens einem Ultraschallwandler (6a und/oder 6b) mindestens ein Ultraschallsignal (10a und/oder 10b) ausgesendet wird und entlang einer Ultraschallmessstrecke (6) mindestens eine Ultraschalllaufzeit t₁ und/oder t₂ des Ultraschallsignals (10a und/oder 10b) im Fluid (8) gemessen wird,
aus der mindestens einen gemessenen Ultraschalllaufzeit t₁ und/oder t₂ die Fließgeschwindigkeit v oder eine proportionale Größe zur Fließgeschwindigkeit v, der Durchfluss, bestimmt wird,
wobei
der Fluiddruck p aus der mindestens einen gemessenen Ultraschalllaufzeit t₁ und/oder t₂ mithilfe einer mathematischen Kompensation (25) bestimmt wird, **dadurch gekennzeichnet, dass**
die mathematische Kompensation (25) eine Messabweichung aufgrund mindestens eines Einflusses aus der nachfolgenden Gruppe von Einflüssen (25a-25f) betrifft:
- eine Länge L der Ultraschallmessstrecke (6) oder Längenänderung ΔL derselben (25a) hervorgerufen durch thermische Ausdehnung,
- eine Ultraschalllaufzeitkomponente entlang der Ultraschallmessstrecke (6), die nicht im Fluid (8) liegt, oder eine Änderung derselben (25b),
- eine Ultraschalllaufzeitkomponente innerhalb der Ultraschallmessstrecke (6), die in einer Änderung (25c) der Zusammensetzung des Fluides (8) liegt,
- eine Befestigung und/oder Lage des Ultraschallwandlers zur Ultraschallmessstrecke (6) oder eine Änderung derselben (25d),
- eine Latenz der Signalverarbeitung oder eine Änderung derselben (25e) und/oder
- einen Durchfluss oder eine Änderung desselben (25 f), und wobei
eine Temperatur T oder eine Temperaturänderung ΔT des Fluides (8) gemessen wird und für die mathematische Kompensation (25) genutzt wird.

2. Verfahren (28) nach Anspruch 1 **dadurch gekennzeichnet, dass**
von dem ersten Ultraschallwandler (6a) ein Ultraschallsignal (10a) ausgesendet wird, das von dem zweiten Ultraschallwandler (6b) empfangen wird, wobei die Ultraschalllaufzeit t₁ gemessen wird,
von dem zweiten Ultraschallwandler (6b) ein Ultraschallsignal (10b) ausgesendet wird, das von dem ersten Ultraschallwandler (6a) empfangen wird, wobei die Ultraschalllaufzeit t₂ gemessen wird,
aus den gemessenen Ultraschalllaufzeiten t₁ und t₂ und/oder aus der Differenz der gemessenen Ultraschalllaufzeiten t₁ und t₂ und/oder der Differenz der Kehrwerte der gemessenen Ultraschalllaufzeiten t₁ und t₂ die Fließgeschwindigkeit v oder eine proportionale Größe zur Fließgeschwindigkeit v, insbesondere der Durchfluss, bestimmt wird.

3. Verfahren (28) nach Anspruch 1 oder 2 **dadurch gekennzeichnet, dass**
mithilfe einer mathematischen Kompensation (25) nach Anspruch 1 der Fluiddruck p:
- aus den gemessenen Ultraschalllaufzeiten t₁ und t₂ und/oder
- aus einer Laufzeitdifferenz der gemessenen Ultraschalllaufzeiten t₁ und t₂ und/oder
- aus einer Differenz der Kehrwerte der gemessenen Ultraschalllaufzeiten t₁ und t₂ und/oder
- aus einer Laufzeitsumme der gemessenen Ultraschalllaufzeiten t₁ und t₂ und/oder
- aus einer Summe der Kehrwerte der gemessenen Ultraschalllaufzeiten t₁ und t₂ und/oder
- aus einem Mittelwert t_{M} der gemessenen Ultraschalllaufzeiten t₁ und t₂
ermittelt wird.

4. Verfahren (28) nach einem der vorhergehenden Ansprüche, **dadurch gekennzeichnet, dass** die Ultraschallmessstrecke (6) schräg mit einem Winkel W zur Fließrichtung des Fluides (8) angeordnet ist und/oder ein oder mehrfach über Reflektoren umgelenkt werden.

5. Verfahren (28) nach einem der vorhergehenden Ansprüche, **dadurch gekennzeichnet, dass** als Temperaturänderung ΔT, insbesondere eine Temperaturänderung ΔT der Temperatur T zu einer Referenztemperatur T_{ref}, gemessen wird.

6. Verfahren (28) nach einem der vorhergehenden Ansprüche, **dadurch gekennzeichnet, dass** ein Anschlussgehäuse (3) mit Taschen (3a, 3b) für die Ultraschallwandler (6a, 6b) vorgesehen ist und/oder die Ultraschallwandler (6a, 6b) jeweils ein Ultraschallwandlergehäuse (23a, 23b) jeweils mit einer Wandung (22a, 22b) mit jeweils einer Dicke D₂₂ₐ, D_{22b} aufweisen, die von mindestens einem Ultraschallsignal (10a, 10b) durchschallt wird.

7. Verfahren (28) nach einem der vorhergehenden Ansprüche, **dadurch gekennzeichnet, dass** die mathematische Kompensation (25) ausschließlich auf Basis mathematischer Berechnungen erfolgt.

8. Verfahren (28) nach einem der vorhergehenden Ansprüche, **dadurch gekennzeichnet, dass** die mathematische Kompensation (25) mindestens eine Eingangsgröße (X₁, X₂, ...X_{N}) und mindestens eine Ausgangsgröße Y aufweist, wobei die mindestens eine Ausgangsgröße Y mithilfe einer Funktion f aus der mindestens einen Eingangsgröße (X₁, X₂, ...X_{N}) gemäß Y = f (X₁, X₂, ...X_{N}) berechnet wird,
wobei insbesondere vorgesehen ist, dass die mindestens eine Ausgangsgröße Y der mathematischen Kompensation (28) unabhängig von Referenzmessungen und/oder unabhängig von Kennfeldermittlungen berechnet wird

9. Verfahren (28) nach Anspruch 8, **dadurch gekennzeichnet, dass** die mindestens eine Eingangsgröße (X₁, X₂, ...X_{N}) auf einem Kennfeld und/oder einer Kennlinie und/oder einem Messwert und/oder empirischen Daten und/oder einer Vergleichsmessung und/oder einer Kalibrierung beruht.

10. Verfahren (28) nach Anspruch 8 oder 9, **dadurch gekennzeichnet, dass** die mindestens eine Ausgangsgröße Y auf einer mindestens geometrischen Beziehung, insbesondere mindestens einer trigonometrischen Beziehung und/oder mindestens einem linearer Zusammenhang und/oder mindestens einem nichtlinearen Zusammenhang und/oder mindestens einer Materialkonstante und/oder mindestens einer Naturkonstante und/oder mindestens einem Algorithmus und/oder mindestens einer analytischen oder numerischen Berechnung und/oder mindestens einer numerischen Simulation beruht.

11. Verfahren (28) nach einem der vorhergehenden Ansprüche, **dadurch gekennzeichnet, dass** die mathematische Kompensation (25) mindestens einen Effekt aus der nachfolgenden Gruppe von Effekten betrifft:
- eine Dicke D₂₂ₐ, D_{22b} mindestens einer Wandung (22a, 22b),
- eine Dickenänderung ΔD₂₂ₐ, ΔD_{22b} mindestens einer Wandung (22a, 22b),
- eine Ultraschallgeschwindigkeit c_{Wandung,22a}, c_{Wandung,22b} mindestens einer Wandung (22a, 22b),
- eine Ultraschallgeschwindigkeitsänderung Δc_{Wandung,22a}, Δc_{wan-dung,22b} mindestens einer Wandung (22a, 22b),
- einer Ultraschallgeschwindigkeit c_{Fluid} des Fluides (8),
- eine Ultraschallgeschwindigkeitsänderung Δc_{Fluid} des Fluides (8)
- die Fließgeschwindigkeit v,
- eine Länge L oder Längenänderung ΔL der Ultraschallmessstrecke (6) aufgrund einer thermischen Ausdehnung, vorzugsweise des Anschlussgehäuses (3), auf Basis einer Temperatur oder einer Temperaturänderung, wobei vorzugsweise die Temperatur oder die Temperaturänderung des Anschlussgehäuses der Temperatur oder der Temperaturänderung des Fluides 8 entspricht,
- ein Kippen eines Ultraschallwandlers (10a, 10b) um einen Winkel V zur Ultraschallmessstrecke (6),
- eine Winkeländerung ΔV des Winkels V,
- eine Lage x_{Wandler} mindestens eines Ultraschallwandlers (10a, 10b) in Richtung der Ultraschallmessstrecke (6),
- eine Lageänderung Δx_{Wandler} mindestens eines Ultraschallwandlers (10a, 10b) in Richtung der Ultraschallmessstrecke (6),
- eine Lage y_{Wandler} mindestens eines Ultraschallwandlers (10a, 10b) quer zur Ultraschallmessstrecke (6) und entlang einer Ebene, die von der Ultraschallmessstrecke (6) und der Achse des Anschlussgehäuses (3) gebildet wird,
- eine Lageänderung Δy_{Wandler} mindestens eines Ultraschallwandlers (10a, 10b) quer zur Ultraschallmessstrecke (6) und entlang einer Ebene, die von der Ultraschallmessstrecke (6) und der Achse des Anschlussgehäuses (3) gebildet wird,
- eine Lage z_{Wandler} mindestens eines Ultraschallwandlers (10a, 10b) quer zur Ultraschallmessstrecke (6) und quer zur Achse des Anschlussgehäuses (3),
- eine Lageänderung Δz_{Wandler} mindestens eines Ultraschallwandlers (10a, 10b) quer zur Ultraschallmessstrecke (6) und quer zur Achse des Anschlussgehäuses (3),
- eine Laufzeitkomponente t_{Durchfluss} aufgrund des Durchflusses und/oder
- eine Laufzeitkomponentenänderung Δt_{Durchfluss} aufgrund des Durchflusses.

12. Verfahren (28) nach einem der vorhergehenden Ansprüche, **dadurch gekennzeichnet, dass** die Latenz der Signalverarbeitung oder eine Änderung derselben durch eine Differenzbildung mindestens einer gemessenen Ultraschalllaufzeit t₁ und/oder t₂ und mindestens einer Latenzkomponente t_{Latenz} kompensiert wird.

13. Verfahren (28) nach einem der vorhergehenden Ansprüche, **dadurch gekennzeichnet, dass** die mindestens eine Latenzkomponente t_{Latenz} aus dem zeitlichen Versatz zwischen mindestens einem Sendesignal 14a, 14b und dem mindestens einen gesendeten Ultraschallsignal 10a, 10b und/oder dem zeitlichen Versatz zwischen mindestens einem Empfangssignal 14a, 14b und dem mindestens einen empfangenen Ultraschallsignal 10a, 10b bestimmt wird.

14. Verfahren (28) nach einem der vorhergehenden Ansprüche, **dadurch gekennzeichnet, dass** auf Basis einer Lage X_{Wandler}, y_{Wandler}, z_{Wandler} und/oder einer Lageänderung Δx_{Wandler}, Δy_{Wandler}, Δz_{Wandler} und/oder des Winkels V und/oder der Winkeländerung ΔV eines Ultraschallwandler 6a, 6b, die Länge L der Ultraschallmessstrecke (6) und/oder eine Längenänderung ΔL der Ultraschallmessstrecke (6) und/oder der Winkel W und/oder eine Winkeländerung ΔW der Ultraschallmessstrecke ermittelt wird.

15. Verfahren (28) nach einem der vorhergehenden Ansprüche, **dadurch gekennzeichnet, dass** ein Fluiddruck p_{E} auf Basis einer Look-Up-Table und/oder eines Kennfelds und/oder einer Referenzmessung und/oder einer Kalibrierung ermittelt wird, wobei der ermittelte Fluiddruck p_{E} als die mindestens eine Eingangsgröße (X₁, X₂, ...X_{N}) zur Bestimmung des Fluiddrucks p herangezogen wird.

16. Ultraschallfluidzähler (1), für die Installation in einem Fluidversorgungsnetz (2), umfassend:
ein Anschlussgehäuse (3) mit einem Einlass (4) und einem Auslass (5),
mindestens eine im Anschlussgehäuse (3) vorgesehenen Ultraschallmessstrecke (6), entlang welcher mindestens eine Ultraschalllaufzeit t₁ und/oder t₂ eines entlang der Ultraschallmessstrecke (6) laufenden Ultraschallsignals (10a und/oder 10b) im Fluid (8) gemessen wird,
mindestens einen ersten und zweiten Ultraschallwandler (6a, 6b), wobei der jeweils erste oder zweite Ultraschallwandler (6a, 6b) das entlang der Ultraschallmessstrecke (6) laufende Ultraschallsignals jeweils empfängt oder aussendet,
eine Steuer- und Recheneinheit (7),
**dadurch gekennzeichnet, dass**
die Steuer- und Recheneinheit (7) dazu hergerichtet ist, das Verfahren (28) zur Ermittlung des Fluiddrucks p gemäß den vorhergehenden Ansprüchen durchzuführen und/oder Daten, insbesondere die gemessene Ultraschalllaufzeit t1 und/oder t2, an ein Headend weiterzuleiten, wobei das Headend dazu hergerichtet ist, das Verfahren (28) zur Ermittlung des Fluiddrucks p gemäß den vorhergehenden Ansprüchen durchzuführen.

17. Ultraschallfluidzähler (1) nach Anspruch 16, **dadurch gekennzeichnet, dass** die Ultraschallmessstrecke (6) in einem, vorzugsweise spitzen, Winkel W zur Achse des Anschlussgehäuses (3) angeordnet ist
und/oder ein Temperatursensor (11) zur Erfassung der Temperatur des Fluides vorgesehen ist
und/oder die Ultraschallwandler (6a, 6b) in Taschen (3a, 3b) im Anschlussgehäuse (3) montiert sind.

18. Ultraschallfluidzähler (1) nach Anspruch 16 oder 17, **dadurch gekennzeichnet, dass** eine Mehrzahl von Ultraschallmessstrecken (6, 6', ..., 6") vorgesehen ist und eine Mehrzahl von gemessenen Ultraschalllaufzeiten (t₁, t₂, t₁', t₂', ..., t₁ⁿ, t₂ⁿ) und/oder Drücken (p, p', ..., p") und/oder Fließgeschwindigkeiten (v, v', ..., vⁿ) und/oder proportionaler Größen der Fließgeschwindigkeiten (v, v', ..., v"), insbesondere Durchflüssen, bestimmt wird,
wobei insbesondere vorgesehen ist, dass die Ultraschallmessstrecken (6, 6', ..., 6") bezüglich des Querschnitts des Anschlussgehäuses (3) in einem Winkel zueinander angeordnet sind und sich schneiden
und/oder eine mittenbetonte Bestimmung der Drücke (p, p', ..., p") und/oder Fließgeschwindigkeiten (v, v', ..., vⁿ) und/oder der proportionalen Größen zur Fließgeschwindigkeit v, v', ..., vⁿ), insbesondere der Durchflüsse, erfolgt.

19. Ultraschallfluidzähler (1) nach Anspruch 18, **dadurch gekennzeichnet, dass** ein gewichteter Mittelwert, vorzugsweise ein gleichgewichteter Mittelwert, der gemessenen Ultraschalllaufzeiten (t₁, t₂, t₁', t₂', ..., t₁ⁿ, t₂ⁿ) und/oder ein gewichteter Mittelwert, vorzugsweise ein gleichgewichteter Mittelwert, der Drücke (p, p', ..., p") und/oder ein gewichteter Mittelwert, vorzugsweise ein gleichgewichteter Mittelwert, der Fließgeschwindigkeiten (v, v', ..., v") und/oder der proportionalen Größen zur Fließgeschwindigkeit (v, v', ..., v"), insbesondere der Durchflüsse, bestimmt wird.

## Claims

1. Method (28) for ascertaining the fluid pressure p in a fluid supply network (2) for fluid (8), having a first ultrasound transducer (6a) and a second ultrasound transducer (6b), in which
at least one ultrasound signal (10a and/or 10b) is emitted by at least one ultrasound transducer (6a and/or 6b) and at least one ultrasound time of flight t₁ and/or t₂ of the ultrasound signal (10a and/or 10b) in the fluid (8) is measured along an ultrasound measurement path (6), the flow velocity v or a quantity proportional to the flow velocity v, the throughput, is determined from the at least one measured ultrasound time of flight t₁ and/or t₂,
wherein
the fluid pressure p is determined from the at least one measured ultrasound time of flight t₁ and/or t₂ with the aid of a mathematical compensation (25), **characterized in that**
the mathematical compensation (25) relates to a measurement deviation on account of at least one influence from the following group of influences (25a-25f):
- a length L of the ultrasound measurement path (6) or length change ΔL thereof (25a), caused by thermal expansion,
- an ultrasound time-of-flight component along the ultrasound measurement path (6), which does not lie in the fluid (8), or a change thereof (25b),
- an ultrasound time-of-flight component within the ultrasound measurement path (6), which lies in a change (25c) of the composition of the fluid (8),
- a fastening and/or position of the ultrasound transducer with respect to the ultrasound measurement path (6) or a change thereof (25d),
- a latency of the signal processing or a change thereof (25e) and/or
- a throughput or a change thereof (25f), and wherein a temperature T or a temperature change ΔT of the fluid (8) is measured and used for the mathematical compensation (25).

2. Method (28) according to Claim 1, **characterized in that**
an ultrasound signal (10a) is emitted by the first ultrasound transducer (6a) and is received by the second ultrasound transducer (6b), the ultrasound time of flight t₁ being measured,
an ultrasound signal (10b) is emitted by the second ultrasound transducer (6b) and is received by the first ultrasound transducer (6a), the ultrasound time of flight t₂ being measured,
the flow velocity v or a quantity proportional to the flow velocity v, in particular the throughput, is determined from the measured ultrasound times of flight t₁ and t₂ and/or from the difference of the measured ultrasound times of flight t₁ and t₂ and/or the difference of the inverses of the measured ultrasound times of flight t₁ and t₂.

3. Method (28) according to Claim 1 or 2, **characterized in that**
with the aid of a mathematical compensation (25) according to Claim 1, the fluid pressure p is ascertained:
- from the measured ultrasound times of flight t₁ and t₂ and/or
- from a time-of-flight difference of the measured ultrasound times of flight t₁ and t₂ and/or
- from a difference of the inverses of the measured ultrasound times of flight t₁ and t₂ and/or
- from a time-of-flight sum of the measured ultrasound times of flight t₁ and t₂ and/or
- from a sum of the inverses of the measured ultrasound times of flight t₁ and t₂ and/or
- from an average value t_{M} of the measured ultrasound times of flight t₁ and t₂.

4. Method (28) according to one of the preceding claims, **characterized in that** the ultrasound measurement path (6) is arranged obliquely at an angle W with respect to the flow direction of the fluid (8) and/or is deviated one or more times by means of reflectors.

5. Method (28) according to one of the preceding claims, **characterized in that** in particular a temperature change ΔT of the temperature T from a reference temperature T_{ref} is measured as the temperature change ΔT.

6. Method (28) according to one of the preceding claims, **characterized in that** a connection housing (3) having compartments (3a, 3b) for the ultrasound transducers (6a, 6b) is provided and/or the ultrasound transducers (6a, 6b) respectively have an ultrasound transducer housing (23a, 23b) respectively having a wall (22a, 22b) respectively with a thickness D₂₂ₐ, D_{22b}, through which at least one ultrasound signal (10a, 10b) passes.

7. Method (28) according to one of the preceding claims, **characterized in that** the mathematical compensation (25) is carried out exclusively on the basis of mathematical calculations.

8. Method (28) according to one of the preceding claims, **characterized in that** the mathematical compensation (25) has at least one input variable (X₁, X₂, ...X_{N}) and at least one output variable Y, the at least one output variable Y being calculated with the aid of a function f from the at least one input variable (X₁, X₂, ...X_{N}) according to Y = f (X₁, X₂, ...X_{N}),
wherein provision is in particular made that the at least one output variable Y of the mathematical compensation (28) is calculated independently of reference measurements and/or independently of characteristic diagram determinations.

9. Method (28) according to Claim 8, **characterized in that** the at least one input variable (X₁, X₂, ...X_{N}) is based on a characteristic diagram and/or a characteristic curve and/or a measurement value and/or empirical data and/or a comparative measurement and/or a calibration.

10. Method (28) according to Claim 8 or 9, **characterized in that** the at least one output variable Y is based on at least one geometrical relationship, in particular at least one trigonometric relationship, and/or at least one linear relationship and/or at least one nonlinear relationship and/or at least one material constant and/or at least one physical constant and/or at least one algorithm and/or at least one analytical or numerical calculation and/or at least one numerical simulation.

11. Method (28) according to one of the preceding claims, **characterized in that** the mathematical compensation (25) relates to at least one effect from the following group of effects:
- a thickness D₂₂ₐ, D_{22b} of at least one wall (22a, 22b),
- a thickness change ΔD₂₂ₐ, ΔD_{22b} of at least one wall (22a, 22b),
- an ultrasound speed c_{wall,22a}, c_{wall,22b} of at least one wall (22a, 22b),
- an ultrasound speed change Δc_{wall,22a}, Δc_{wall,22b} of at least one wall (22a, 22b),
- an ultrasound speed c_{fluid} of the fluid (8),
- an ultrasound speed change Δc_{fluid} of the fluid (8),
- the flow velocity v,
- a length L or length change ΔL of the ultrasound measurement path (6) due to a thermal expansion, preferably of the connection housing (3), on the basis of a temperature or a temperature change, the temperature or the temperature change of the connection housing preferably corresponding to the temperature or the temperature change of the fluid (8),
- a tilt of an ultrasound transducer (10a, 10b) by an angle V with respect to the ultrasound measurement path (6),
- an angle change ΔV of the angle V,
- a position x_{transducer} of at least one ultrasound transducer (10a, 10b) in the direction of the ultrasound measurement path (6),
- a position change Δx_{transducer} of at least one ultrasound transducer (10a, 10b) in the direction of the ultrasound measurement path (6),
- a position y_{transducer} of at least one ultrasound transducer (10a, 10b) transversely with respect to the ultrasound measurement path (6) and along a plane which is formed by the ultrasound measurement path (6) and the axis of the connection housing (3),
- a position change Δy_{transducer} of at least one ultrasound transducer (10a, 10b) transversely with respect to the ultrasound measurement path (6) and along a plane which is formed by the ultrasound measurement path (6) and the axis of the connection housing (3),
- a position z_{transducer} of at least one ultrasound transducer (10a, 10b) transversely with respect to the ultrasound measurement path (6) and transversely with respect to the axis of the connection housing (3),
- a position change Δz_{transducer} of at least one ultrasound transducer (10a, 10b) transversely with respect to the ultrasound measurement path (6) and transversely with respect to the axis of the connection housing (3),
- a time-of-flight component t_{throughput} due to the throughput and/or
- a time-of-flight component change Δt_{throughput} due to the throughput.

12. Method (28) according to one of the preceding claims, **characterized in that** the latency of the signal processing or a change thereof is compensated by taking the difference of at least one measured ultrasound time of flight t₁ and/or t₂ and at least one latency component t_{latency}.

13. Method (28) according to one of the preceding claims, **characterized in that** the at least one latency component t_{latency} is determined from the time offset between at least one transmission signal 14a, 14b and the at least one transmitted ultrasound signal 10a, 10b and/or the time offset between at least one reception signal 14a, 14b and the at least one received ultrasound signal 10a, 10b.

14. Method (28) according to one of the preceding claims, **characterized in that** the length L of the ultrasound measurement path (6) and/or a length change ΔL of the ultrasound measurement path (6) and/or the angle W and/or an angle change ΔW of the ultrasound measurement path is ascertained on the basis of a position x_{transducer}, y_{transducer}, z_{transducer} and/or a position change Δx_{transducer}, Δy_{transducer}, Δz_{transducer} and/or the angle V and/or the angle change ΔV of an ultrasound transducer 6a, 6b.

15. Method (28) according to one of the preceding claims, **characterized in that** a fluid pressure p_{E} is ascertained on the basis of a look-up table and/or a characteristic diagram and/or a reference measurement and/or a calibration, the ascertained fluid pressure p_{E} being employed as the at least one input variable (X₁, X₂, ...X_{N}) for the determination of the fluid pressure p.

16. Ultrasonic fluid meter (1) for installation in a fluid supply network (2), comprising:
a connection housing (3) with an inlet (4) and an outlet (5),
at least one ultrasound measurement path (6), which is provided in the connection housing (3) and along which at least one ultrasound time of flight t₁ and/or t₂ of an ultrasound signal (10a and/or 10b) propagating along the ultrasound measurement path (6) in the fluid (8) is measured,
at least a first and second ultrasound transducer (6a, 6b), the respective first or second ultrasound transducer (6a, 6b) respectively receiving or emitting the ultrasound signal propagating along the ultrasound measurement path (6),
a control and calculation unit (7),
**characterized in that**
the control and calculation unit (7) is configured to carry out the method (28) for ascertaining the fluid pressure p according to the preceding claims and/or to forward data, in particular the measured ultrasound time of flight t₁ and/or t₂, to a head end, the head end being configured to carry out the method (28) for ascertaining the fluid pressure p according to the preceding claims.

17. Ultrasonic fluid meter (1) according to Claim 16, **characterized in that** the ultrasound measurement path (6) is arranged at a preferably acute angle W with respect to the axis of the connection housing (3),
and/or a temperature sensor (11) for recording the temperature of the fluid is provided,
and/or the ultrasound transducers (6a, 6b) are mounted in compartments (3a, 3b) in the connection housing (3).

18. Ultrasonic fluid meter (1) according to Claim 16 or 17, **characterized in that** a multiplicity of ultrasound measurement paths (6, 6', ..., 6ⁿ) are provided and a multiplicity of measured ultrasound times of flight (t₁, t₂, t₁', t₂', ..., t₁ⁿ, t₂ⁿ) and/or pressures (p, p', ..., pⁿ) and/or flow velocities (v, v', ..., vⁿ) and/or quantities proportional to the flow velocities (v, v', ..., vⁿ), in particular throughputs, are determined,
wherein provision is in particular made that the ultrasound measurement paths (6, 6', ..., 6ⁿ), in relation to the cross section of the connection housing (3), are arranged at an angle with respect to one another and intersect,
and/or a centreweighted determination of the pressures (p, p', ..., pⁿ) and/or flow velocities (v, v', ..., vⁿ) and/or of the quantities proportional to the flow velocity (v, v', ..., vⁿ), in particular the throughputs, is carried out.

19. Ultrasonic fluid meter (1) according to Claim 18, **characterized in that** a weighted average value, preferably an equally weighted average value, of the measured ultrasound times of flight (t₁, t₂, t₁', t₂', ..., t₁ⁿ, t₂ⁿ) and/or a weighted average value, preferably an equally weighted average value, of the pressures (p, p', ..., pⁿ) and/or a weighted average value, preferably an equally weighted average value, of the flow velocities (v, v', ..., vⁿ) and/or of the quantities proportional to the flow velocity (v, v', ..., vⁿ), in particular the throughputs, is determined.

## Revendications

1. Procédé (28) de détermination de la pression de fluide P dans un réseau d'alimentation en fluide (2) pour fluide (8), comprenant un premier transducteur d'ultrasons (6a) et un deuxième transducteur d'ultrasons (6b), avec lequel
au moins un signal ultrasonore (10a et/ou 10b) est émis par au moins un transducteur d'ultrasons (6a et/ou 6b) et au moins un temps de propagation des ultrasons t₁ et/ou t₂ du signal ultrasonore (10a et/ou 10b) est mesuré dans le fluide (8) le long d'un segment de mesure par ultrasons (6),
la vitesse d'écoulement v ou une grandeur proportionnelle à la vitesse d'écoulement v, le débit, sont définis à partir de l'au moins un temps de propagation des ultrasons t₁ et/ou t₂ mesuré,
la pression de fluide p étant définie à partir de l'au moins un temps de propagation des ultrasons t₁ et/ou t₂ mesuré à l'aide d'une compensation mathématique (25), **caractérisé en ce que**
la compensation mathématique (25) concernant un écart de mesure en raison d'au moins une influence issue du groupe d'influences (25a-25f) suivant :
- une longueur l du segment de mesure par ultrasons (6) ou une variation de longueur ΔL de celui-ci (25a) causée par la dilatation thermique,
- une composante de temps de propagation des ultrasons le long du segment de mesure par ultrasons (6) qui ne se trouve pas dans le fluide (8), ou une variation de celle-ci (25b),
- une composante de temps de propagation des ultrasons à l'intérieur du segment de mesure par ultrasons (6), qui se trouve dans une variation (25c) de la composition du fluide (8),
- une fixation et/ou une position du transducteur d'ultrasons par rapport au segment de mesure par ultrasons (6) ou une variation de celle-ci (25d),
- une latence du traitement du signal ou une variation de celle-ci (25e) et/ou
- un débit ou une variation de celui-ci (25 f), et
une température T ou une variation de température ΔT du fluide (8) étant mesurée et utilisée pour la compensation mathématique (25).

2. Procédé (28) selon la revendication 1, **caractérisé en ce que**
un signal ultrasonore (10a) est émis par le premier transducteur d'ultrasons (6a), lequel est reçu par le deuxième transducteur d'ultrasons (6b), le temps de propagation des ultrasons t₁ étant mesuré,
un signal ultrasonore (10b) est émis par le deuxième transducteur d'ultrasons (6b), lequel est reçu par le premier transducteur d'ultrasons (6a), le temps de propagation des ultrasons t₂ étant mesuré,
la vitesse d'écoulement v ou une grandeur proportionnelle à la vitesse d'écoulement v, notamment le débit, étant définie à partir des temps de propagation des ultrasons t₁ et t₂ mesurés et/ou à partir de la différence des temps de propagation des ultrasons t₁ et t₂ mesurés et/ou de la différence des inverses des temps de propagation des ultrasons t₁ et t₂ mesurés.

3. Procédé (28) selon la revendication 1 ou 2, **caractérisé en ce que**
à l'aide d'une compensation mathématique (25) selon la revendication 1, la pression de fluide p est déterminée :
- à partir des temps de propagation des ultrasons t₁ et t₂ mesurés et/ou - à partir d'une différence de temps de propagation des temps de propagation des ultrasons t₁ et t₂ mesurés et/ou - à partir d'une différence entre les inverses des temps de propagation des ultrasons t₁ et t₂ mesurés et/ou - à partir d'une somme de temps de propagation des temps de propagation des ultrasons t₁ et t₂ mesurés et/ou - à partir d'une somme des inverses des temps de propagation des ultrasons t₁ et t₂ mesurés et/ou
- à partir d'une valeur moyenne t_{M} des temps de propagation des ultrasons t₁ et t₂ mesurés.

4. Procédé (28) selon l'une des revendications précédentes, **caractérisé en ce que** le segment de mesure par ultrasons (6) est disposé obliquement selon un angle W par rapport à la direction d'écoulement du fluide (8) et/ou est dévié une ou plusieurs fois par l'intermédiaire de réflecteurs.

5. Procédé (28) selon l'une des revendications précédentes, **caractérisé en ce que** la variation de température ΔT mesurée est notamment une variation de température ΔT de la température T par rapport à une température de référence T_{ref}.

6. Procédé (28) selon l'une des revendications précédentes, **caractérisé en ce qu'**un boîtier de raccordement (3) comprenant des poches (3a, 3b) pour les transducteurs d'ultrasons (6a, 6b) est prévu et/ou les transducteurs d'ultrasons (6a, 6b) possèdent respectivement un boîtier de transducteur d'ultrasons (23a, 23b), respectivement avec une paroi (22a, 22b) ayant respectivement une épaisseur D₂₂ₐ, D_{22b} qui est traversée par au moins un signal ultrasonore (10a, 10b).

7. Procédé (28) selon l'une des revendications précédentes, **caractérisé en ce que** la compensation mathématique (25) est réalisée exclusivement sur la base de calculs mathématiques.

8. Procédé (28) selon l'une des revendications précédentes, **caractérisé en ce que** la compensation mathématique (25) présente au moins une grandeur d'entrée (X₁, X₂, ...X_{N}) et au moins une grandeur de sortie Y, l'au moins une grandeur de sortie Y étant calculée à l'aide d'une fonction f à partir de l'au moins une grandeur d'entrée (X₁, X₂, ...X_{N}) selon Y = f (X₁, X₂, ...X_{N}),
en prévoyant notamment que l'au moins une grandeur de sortie Y de la compensation mathématique (28) est calculée indépendamment de mesures de référence et/ou indépendamment de déterminations par diagramme caractéristique.

9. Procédé (28) selon la revendication 8, **caractérisé en ce que** l'au moins une grandeur d'entrée (X₁, X₂, ...X_{N}) est basée sur un diagramme caractéristique et/ou une courbe caractéristique et/ou une valeur de mesure et/ou des données empiriques et/ou une mesure comparative et/ou un étalonnage.

10. Procédé (28) selon la revendication 8 ou 9, **caractérisé en ce que** l'au moins une grandeur de sortie Y est basée sur au moins une relation géométrique, en particulier au moins une relation trigonométrique et/ou au moins une relation linéaire et/ou au moins une relation non linéaire et/ou au moins une constante matérielle et/ou au moins une constante naturelle et/ou au moins un algorithme et/ou au moins un calcul analytique ou numérique et/ou au moins une simulation numérique.

11. Procédé (28) selon l'une des revendications précédentes, **caractérisé en ce que** la compensation mathématique (25) concerne au moins un effet du groupe d'effets suivant :
- une épaisseur D₂₂ₐ, D_{22b} d'au moins une paroi (22a, 22b),
- une variation de l'épaisseur ΔD₂₂ₐ, ΔD_{22b} d'au moins une paroi (22a, 22b),
- une vitesse des ultrasons c_{Wandung,22a}, c_{Wandung,22b} d'au moins une paroi (22a, 22b),
- une variation de la vitesse des ultrasons Δc_{Wandung,22a}, Δc_{Wandung,22b} d'au moins une paroi (22a, 22b),
- une vitesse des ultrasons C_{Fluid} du fluide (8),
- une variation de la vitesse des ultrasons Δc_{Fluid} du fluide (8),
- la vitesse d'écoulement v,
- une longueur L ou une variation de longueur ΔL du segment de mesure par ultrasons (6) en raison d'une dilatation thermique, de préférence du boîtier de raccordement (3), sur la base d'une température ou d'une variation de température, la température ou la variation de température du boîtier de raccordement correspondant de préférence à la température ou à la variation de température du fluide (8),
- une inclinaison d'un transducteur d'ultrasons (10a, 10b) d'un angle V par rapport au segment de mesure par ultrasons (6),
- une variation d'angle ΔV de l'angle V,
- une position x_{Wandler} d'au moins un transducteur d'ultrasons (10a, 10b) dans la direction du segment de mesure par ultrasons (6),
- un changement de position Δx_{Wandler} d'au moins un transducteur d'ultrasons (10a, 10b) dans la direction du segment de mesure par ultrasons (6),
- une position y_{Wandler} d'au moins un transducteur d'ultrasons (10a, 10b) transversalement par rapport au segment de mesure par ultrasons (6) et le long d'un plan qui est formé par le segment de mesure par ultrasons (6) et l'axe du boîtier de raccordement (3),
- un changement de position Δy_{Wandler} d'au moins un transducteur d'ultrasons (10a, 10b) transversalement par rapport au segment de mesure par ultrasons (6) et le long d'un plan qui est formé par le segment de mesure par ultrasons (6) et l'axe du boîtier de raccordement (3),
- une position z_{Wandler} d'au moins un transducteur d'ultrasons (10a, 10b) transversalement par rapport au segment de mesure par ultrasons (6) et transversalement par rapport à l'axe du boîtier de raccordement (3),
- un changement de position Δz_{Wandler} d'au moins un transducteur d'ultrasons (10a, 10b) transversalement par rapport au segment de mesure par ultrasons (6) et transversalement par rapport à l'axe du boîtier de raccordement (3),
- une composante de temps de propagation t_{Durchfluss} en raison du débit et/ou
- un changement de composante de temps de propagation Δt_{Durchfluss} en raison du débit.

12. Procédé (28) selon l'une des revendications précédentes, **caractérisé en ce que** la latence du traitement du signal ou une variation de celui-ci est compensée par le calcul d'une différence entre au moins un temps de propagation des ultrasons t₁ et/ou t₂ mesuré et au moins une composante de latence t_{Latenz}.

13. Procédé (28) selon l'une des revendications précédentes, **caractérisé en ce que** l'au moins une composante de latence t_{Latenz} est définie à partir du décalage temporel entre au moins un signal d'émission (14a, 14b) et l'au moins un signal ultrasonore émis (10a, 10b) et/ou du décalage temporel entre au moins un signal reçu (14a, 14b) et l'au moins un signal ultrasonore reçu (10a, 10b).

14. Procédé (28) selon l'une des revendications précédentes, **caractérisé en ce que** la longueur L du segment de mesure par ultrasons (6) et/ou une variation de longueur ΔL du segment de mesure par ultrasons (6) et/ou l'angle W et/ou une variation d'angle ΔW du segment de mesure par ultrasons est déterminée sur la base d'une position x_{Wandler}, y_{Wandler}, z_{Wandler} et/ou d'un changement de position Δx_{Wandler}, Δy_{Wandler}, Δz_{Wandler} et/ou de l'angle V et/ou de la variation d'angle ΔV d'un transducteur d'ultrasons (6a, 6b).

15. Procédé (28) selon l'une des revendications précédentes, **caractérisé en ce qu'**une pression de fluide p_{E} est déterminée sur la base d'une table de consultation et/ou d'un diagramme caractéristique et/ou d'une mesure de référence et/ou d'un étalonnage, la pression de fluide p_{E} déterminée étant utilisé comme l'au moins une grandeur d'entrée (X₁, X₂, ...X_{N}) pour définir la pression de fluide p.

16. Compteur de fluide à ultrasons (1) destiné à être installé dans un réseau d'alimentation en fluide (2), comprenant :
un boîtier de raccordement (3) pourvu d'une entrée (4) et d'une sortie (5),
au moins un segment de mesure par ultrasons (6) prévu dans le boîtier de raccordement (3), le long duquel est mesuré au moins un temps de propagation des ultrasons t₁ et/ou t₂ d'un signal ultrasonore (10a et/ou 10b) qui se propage le long du segment de mesure par ultrasons (6) dans le fluide (8),
au moins un premier et un deuxième transducteur d'ultrasons (6a, 6b), le premier ou le deuxième transducteur d'ultrasons (6a, 6b) respectif recevant ou émettant respectivement le signal ultrasonore qui se propage le long du segment de mesure par ultrasons (6),
une unité de commande et de calcul (7),
**caractérisé en ce que**
l'unité de commande et de calcul (7) est conçue pour mettre en œuvre le procédé (28) de détermination de la pression de fluide p selon les revendications précédentes et/ou pour retransmettre des données, en particulier le temps de propagation des ultrasons t₁ et/ou t₂ mesuré à une tête de réseau, la tête de réseau étant conçue pour mettre en œuvre le procédé (28) de détermination de la pression de fluide p selon les revendications précédentes.

17. Compteur de fluide à ultrasons (1) selon la revendication 16, **caractérisé en ce que** le segment de mesure par ultrasons (6) est disposé selon un angle W, de préférence aigu, par rapport à l'axe du boîtier de raccordement (3),
et/ou un capteur de température (11) est prévu pour détecter la température du fluide,
et/ou les transducteurs d'ultrasons (6a, 6b) sont montés dans des poches (3a, 3b) dans le boîtier de raccordement (3).

18. Compteur de fluide à ultrasons (1) selon la revendication 16 ou 17, **caractérisé en ce qu'**une pluralité de segments de mesure par ultrasons (6, 6', ..., 6ⁿ) sont prévus et une pluralité de temps de propagation des ultrasons (t₁, t₂, t₁', t₂', ..., t₁ⁿ, t₂ⁿ) mesurés et/ou pressions (p, p', ..., pⁿ) et/ou vitesses d'écoulement (v, v', ..., vⁿ) et/ou grandeurs proportionnelles des vitesses d'écoulement (v, v', ..., vⁿ), en particulier des débits, sont définis,
en prévoyant notamment que les segments de mesure par ultrasons (6, 6', ..., 6ⁿ) sont disposés selon un angle les uns par rapport aux autres en référence à la section transversale du boîtier de raccordement (3) et se croisent,
et/ou une définition centrée des pressions (p, p', ..., pⁿ) et/ou des vitesses d'écoulement (v, v', ..., vⁿ) et/ou des grandeurs proportionnelles à la vitesse d'écoulement (v, v', ..., vⁿ), en particulier des débits, est effectuée.

19. Compteur de fluide à ultrasons (1) selon la revendication 18, **caractérisé en ce qu'**une valeur moyenne pondérée, de préférence une valeur moyenne équilibrée, des temps de propagation des ultrasons (t₁, t₂, t₁', t₂', ..., t₁ⁿ, t₂ⁿ) mesurés et/ou une valeur moyenne pondérée, de préférence une valeur moyenne équilibrée, des pressions (p, p', ..., pⁿ) et/ou une valeur moyenne pondérée, de préférence une valeur moyenne équilibrée, des vitesses d'écoulement (v, v', ..., vⁿ) et/ou des grandeurs proportionnelles à la vitesse d'écoulement (v, v', ..., vⁿ), en particulier des débits, est définie.
